# EUROPEAN PATENT SPECIFICATION

(11) **EP 4 610 795 B1**
(45) Date of publication and mention of the grant of the patent: **30.09.2026**
(21) Application number: 23882505.3
(22) Date of filing: 18.10.2023
(51) Int. Cl.: G06F 3/01, G06F 3/04812, G06F 3/04815, G06F 3/04842, G06F 3/04845, G06T 19/00

(54) **INFORMATION PROCESSING DEVICE AND INFORMATION PROCESSING METHOD**
INFORMATIONSVERARBEITUNGSVORRICHTUNG UND INFORMATIONSVERARBEITUNGSVERFAHREN
DISPOSITIF DE TRAITEMENT D'INFORMATIONS ET PROCÉDÉ DE TRAITEMENT D'INFORMATIONS

(30) Priority: 24.10.2022 US 202263418755 P
(43) Date of publication of application: 03.09.2025
(73) Proprietor: Sony Group Corporation, Tokyo 108-0075 (JP)
(72) Inventor: YONEDA, Masafumi, Tokyo 108-0075 (JP); ISHIKAWA, Tsuyoshi, Tokyo 108-0075 (JP); YUASA, Hiroshi, Tokyo 108-0075 (JP); YAMANO, Ikuo, Tokyo 108-0075 (JP); FUKUMA, Yohei, Tokyo 108-0075 (JP); ISHIKAWA, Yuri, Tokyo 108-0075 (JP)
(74) Representative: D Young & Co LLP
(86) International application number: PCT/JP2023/037650
(87) International publication number: WO 2024/090300

(56) References cited:
- JP-A- 2002 042 172
- US-A1- 2016 004 335
- US-A1- 2020 012 341
- US-A1- 2020 226 814
- US-A1- 2020 226 814
- US-B1- 11 294 475
- FIGUEIREDO LUCAS ET AL: "A comparative evaluation of direct hand and wand interactions on consumer devices", COMPUTERS AND GRAPHICS, ELSEVIER, GB, vol. 77, 18 October 2018 (2018-10-18), pages 108 - 121, XP085555626, ISSN: 0097-8493, DOI: 10.1016/J.CAG.2018.10.006

## Description

### TECHNICAL FIELD

The present technology relates to an information processing apparatus and an information processing method, and more particularly, to an information processing apparatus and an information processing method suitably used to indicate a position in a Cross Reality (XR) space.

### BACKGROUND ART

A pen-type input device or the like is conventionally used to indicate a position in an XR space (see, for example, Patent Document 1).

### CITATION LIST

### PATENT DOCUMENT

Patent Document 1: WO 2019/220803 A

### SUMMARY OF THE INVENTION

### PROBLEMS TO BE SOLVED BY THE INVENTION

Meanwhile, with the recent spread of XR technology, there is an increasing demand for a technology that makes it easier to indicate a position in an XR space.

The present technology has been made in view of such circumstances, and an object thereof is to improve operability of an operation related to indication of a position in an XR space.

Prior art includes: US 11 294 475 B1, US 2020/226814 A1 and FIGUEIREDO LUCAS ET AL: "A comparative evaluation of direct hand and wand interactions on consumer devices", COMPUTERS AND GRAPHICS, ELSEVIER, GB, vol. 77, 18 October 2018, pages 108-121. Each of these prior art disclosures describes a prior art device.

### SOLUTIONS TO PROBLEMS

The invention is defined by the appended claims.

### BRIEF DESCRIPTION OF DRAWINGS

Fig. 1 is a diagram illustrating an embodiment of an XR system to which the present technology is applied.
Fig. 2 is diagrams illustrating display examples of the XR system.
Fig. 3 is a diagram illustrating another display example of the XR system.
Fig. 4 is a block diagram illustrating a configuration example of an information processing apparatus and a terminal apparatus.
Fig. 5 is external views illustrating a configuration example of a controller device.
Fig. 6 is diagrams illustrating methods for holding the controller device.
Fig. 7 is diagrams illustrating other methods for holding the controller device.
Fig. 8 is a diagram illustrating another method for holding the controller device.
Fig. 9 is diagrams illustrating an arrangement example of operation members of the controller device.
Fig. 10 is diagrams illustrating arrangement examples of markers of the controller device.
Fig. 11 is diagrams illustrating examples of how the markers of the controller device look.
Fig. 12 is diagrams for explaining a method of recognizing a position and an attitude of the controller device.
Fig. 13 is a diagram illustrating an example of an internal configuration of the controller device.
Fig. 14 is a diagram illustrating an arrangement example of tactile devices of the controller device.
Fig. 15 is a flowchart for explaining a process for controlling the operation members performed by the XR system.
Fig. 16 is a diagram for explaining the process for controlling the operation members performed by the XR system.
Fig. 17 is diagrams illustrating examples of a method for holding the controller device.
Fig. 18 is diagrams illustrating other examples of the method for holding the controller device.
Fig. 19 is a diagram illustrating another example of the method for holding the controller device.
Fig. 20 is a flowchart for explaining a process for controlling tactile feedback performed by the XR system.
Fig. 21 is diagrams for explaining examples of tactile feedback.
Fig. 22 is diagrams for explaining other examples of the tactile feedback.
Fig. 23 is a diagram for explaining another example of the tactile feedback.
Fig. 24 is a diagram illustrating an example of an assembly.
Fig. 25 is a flowchart for explaining a first embodiment of a process for controlling activation performed by the XR system.
Fig. 26 is a diagram illustrating a display example of a specification point.
Fig. 27 is a diagram illustrating a display example of a ray.
Fig. 28 is diagrams illustrating display examples of a specification point and a ray.
Fig. 29 is a diagram for explaining a method for activating all components.
Fig. 30 is a diagram illustrating a display example of an activated component and deactivated components.
Fig. 31 is a diagram for explaining a method of activating a component using a gesture.
Fig. 32 is a flowchart for explaining a second embodiment of the process for controlling activation performed by the XR system.
Fig. 33 is a diagram for explaining a second embodiment of the process for controlling activation.
Fig. 34 is a block diagram illustrating a configuration example of a computer.

### MODE FOR CARRYING OUT THE INVENTION

Modes for carrying out the present technology will be described hereinafter. The description will be given in the following order.
1. Embodiment
2. Modifications
3. Others

### <<1. Embodiment>>

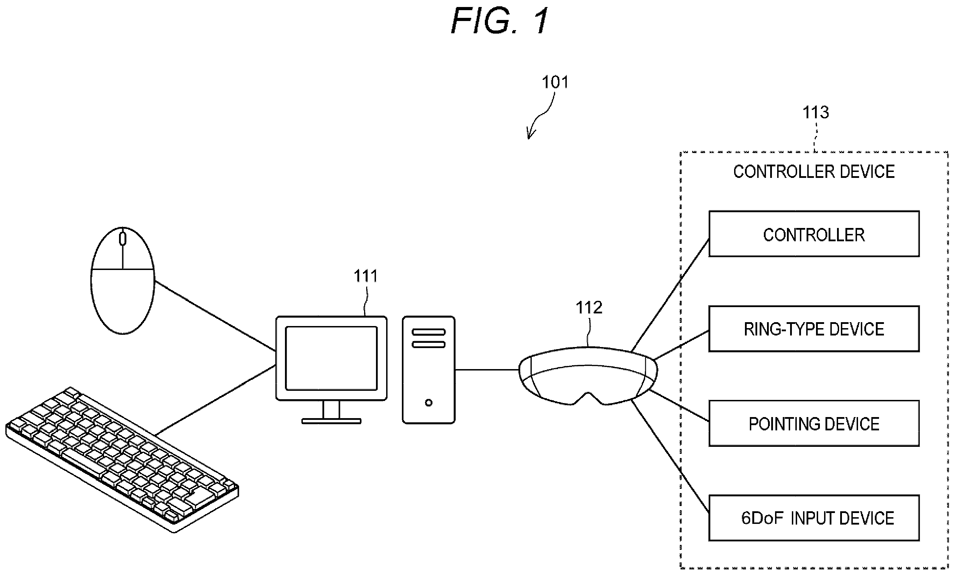

An embodiment of the present technology will be described with reference to Figs. 1 to 33.

### <Configuration Example of XR System 101>

Fig. 1 illustrates a configuration example of a cross reality (XR) system 101, which is an embodiment of an information processing system to which the present technology is applied.

The XR system 101 is a system that realizes XR, which is a technology of fusing a real world and a virtual world and includes virtual reality (VR), augmented reality (AR), mixed reality (MR), and substitutional reality (SR). The XR system 101 is a system that presents, to a user, a space (hereinafter referred to as an XR space) obtained by fusing a real space and a virtual space. For example, the XR system 101 can present an unreal virtual object (hereinafter referred to as a virtual object), such as a model (hereinafter referred to as a CAD model) created by computer aided design (CAD), to the user as if the virtual object were present on the spot.

The XR system 101 includes an information processing apparatus 111, a terminal apparatus 112, and a controller device 113.

The information processing apparatus 111 and the terminal apparatus 112 can communicate with each other wirelessly or by wire, and transmit and receive data to and from each other. The terminal apparatus 112 and the controller device 113 can communicate with each other wirelessly or by wire, and transmit and receive data to and from each other. The information processing apparatus 111 and the controller device 113 communicate with each other via the terminal apparatus 112, and transmit and receive data to and from each other.

For example, the information processing apparatus 111 can independently receive operations by the user and present various types of information such as visual information and auditory information to the user.

Furthermore, the information processing apparatus 111 controls the terminal apparatus 112 and controls presentation of an XR space to the user by the terminal apparatus 112, for example, by executing a predetermined application (hereinafter referred to as an XR app). For example, the information processing apparatus 111 executes the XR app to control output of various types of information such as visual information and auditory information in the terminal apparatus 112 and construct an XR space presented by the terminal apparatus 112.

Fig. 1 illustrates an example in which the information processing apparatus 111 includes a personal computer (PC) including an operation input unit including a mouse and a keyboard. For example, the information processing apparatus 111 may include another information processing apparatus such as a smartphone or a tablet terminal. For example, the information processing apparatus 111 may include a plurality of information processing apparatuses. For example, the information processing apparatus 111 may include a system constructed by cloud computing over a network.

The terminal apparatus 112 is an apparatus that presents an XR space to the user.

Fig. 1 illustrates an example in which the terminal apparatus 112 is a head mounted display apparatus that can be mounted on the user's head and includes a head mounted display (HMD) that is an apparatus that presents an XR space to the user. More specifically, Fig. 1 illustrates an example in which the terminal apparatus 112 is a non-transmissive HMD that covers the user's field of view.

For example, the terminal apparatus 112 includes a video see-through HMD having an imaging function of capturing an image of a real space on the basis of the user's point of view and capable of presenting, to the user, a composite image obtained by combining together a real image obtained by capturing an image of a real space and an image of a virtual space (hereinafter referred to as a virtual image) such as computer graphics (CG).

For example, the terminal apparatus 112 includes left and right imaging units respectively corresponding to the user's left and right eyes and left and right display units respectively corresponding to the user's left and right eyes.

For example, the left and right imaging units constitute a stereo camera, and capture images in a line-of-sight direction of the user (hereinafter referred to as visual field images) from a plurality of points of view corresponding to the user's left and right eyes. That is, the left and right imaging units capture images of objects (hereinafter referred to as real objects) in a real space viewed from the user's points of view.

The left and right display units can display different images for the left and right eyes, respectively, and can present a three-dimensional virtual object by displaying images with parallax for the left and right eyes. For example, the left and right display units display left and right visual field images captured by the left and right imaging units, respectively.

Note that the terminal apparatus 112 may include, for example, another terminal apparatus for XR, such as a smartphone or the like set in, for example, AR glasses or goggles for use. Furthermore, for example, a display apparatus such as a spatial reproduction display may be used instead of the terminal apparatus 112.

The controller device 113 is used for operations and inputs (hereinafter referred to as operation inputs) to an XR space presented to the user by the terminal apparatus 112. For example, the user can perform, using the controller device 113, various operations on virtual objects displayed on the terminal apparatus 112.

For example, the controller device 113 detects at least one of an operation input by the user or behavior of the user (for example, a gesture) using at least one of operation members, such as buttons, or a sensor. The controller device 113 transmits a signal (hereinafter referred to as a controller signal) including at least one of an operation input signal indicating an operation input by the user or a behavior signal indicating behavior of the user to the information processing apparatus 111 via the terminal apparatus 112.

Furthermore, for example, the controller device 113a includes a tactile device that presents a tactile stimulus such as vibration, and presents the tactile stimulus to the user under the control of the information processing apparatus 111 or the terminal apparatus 112.

The controller device 113 includes, for example, one or more types of input devices such as a controller, a ring-type input device, a pointing device, and a six-degree-of freedom (6DoF) input device.

The controller is, for example, an input device held by the user's hand. The controller may include, for example, operation members, such as buttons, operable by the user. For example, the user can perform a selection operation, a determination operation, a scroll operation, and the like on a virtual object displayed on the terminal apparatus 112 by pressing the buttons of the controller. Furthermore, the controller may include, for example, a touch sensor and a motion sensor.

Note that the controller is not limited to being held by the user's hand, and, for example, may be worn on one of the user's body parts including an elbow, an arm, a knee, an ankle, and a thigh.

The ring-type device is a ring-type input device worn on the user's finger. The ring-type device may include, for example, operation members, such as buttons, operable by the user. For example, the user can change a position and an attitude of a virtual object (for example, a three-dimensional model) in an XR space with six degrees of freedom (6DoF) by operating the ring-type device.

The pointing device is an input device capable of indicating any position in an XR space. For example, the 6DoF position and attitude of the pointing device are recognized by the information processing apparatus 111 via the terminal apparatus 112 by a tracking method such as a bright spot tracking method, a porcelain tracking method, or an ultrasonic tracking method.

The 6DoF input device is, for example, an input device capable of performing 6DoF operations.

For example, the user can perform an operation input using the controller device 113 while viewing various objects (display objects) displayed on the information processing apparatus 111 or the terminal apparatus 112.

Note that types and the number of the controller devices 113 are not particularly limited. For example, as the controller device 113, an input device other than the above-described types may be used, or an input device obtained by combining a plurality of types of input devices may be used, instead.

For example, the XR system 101 can be applied to various fields such as a manufacturing field and a medical field.

For example, the XR system 101 can perform product design support and assembly support in the manufacturing field. For example, in a product design stage, the user can freely edit a three-dimensional object, which is a virtual object, using the XR system 101, or can grasp a design result and a design in advance before trial production by comparing the virtual object with the real world.

For example, the XR system 101 can support surgery and education in the medical field. For example, using the XR system 101, the user can display a state in a patient's body on his/her body surface to grasp a surgical site or perform training in advance.

Note that, for example, in a case where the XR space is shared by a plurality of users, for example, the terminal apparatus 112 and the controller device 113 are provided for each user in the XR system 101.

### <Display Examples in XR System 101>

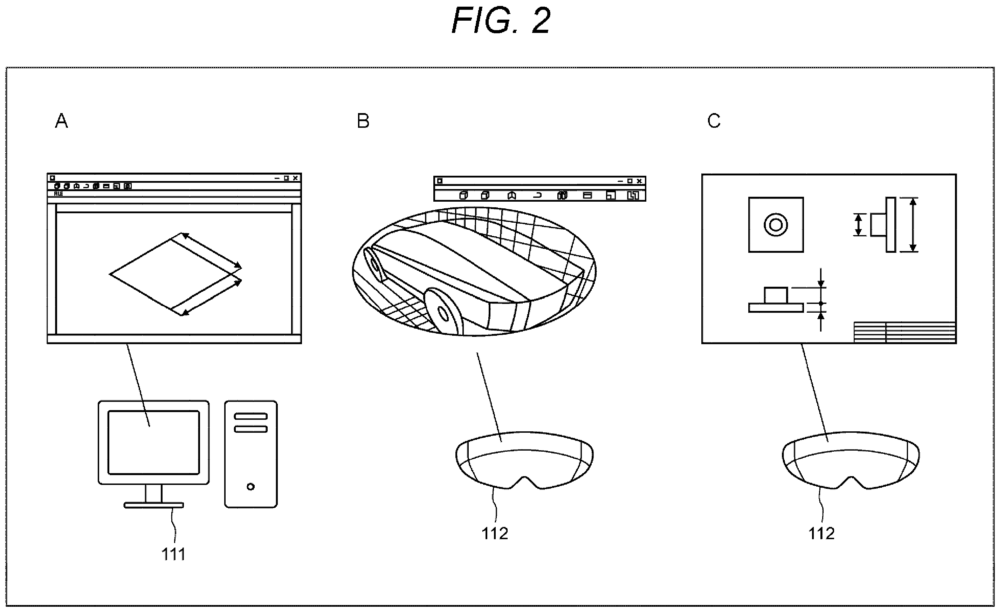

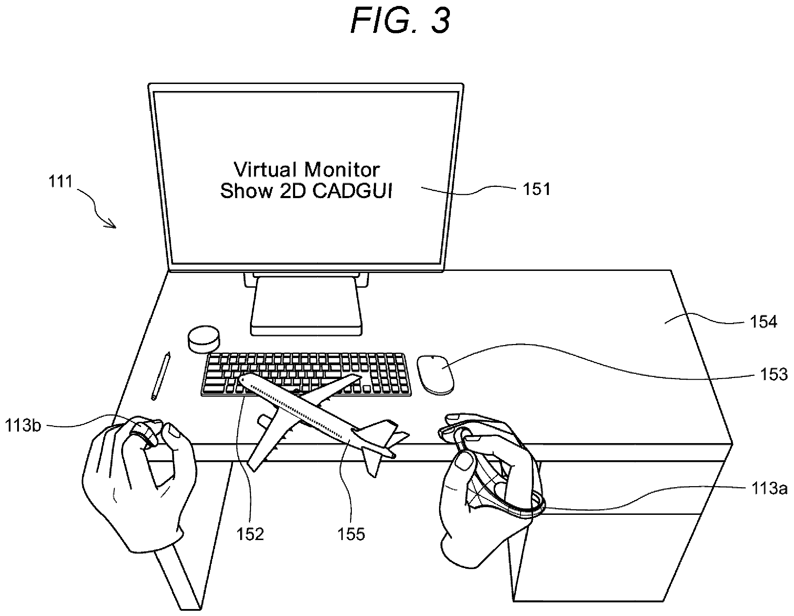

Here, display examples of a display object in the XR system 101 will be described with reference to Figs. 2 and 3.

Figs. 2 and 3 illustrate display examples of a display object in the XR system 101 in a case where a CAD model is created.

For example, as illustrated in A of Fig. 2, the information processing apparatus 111 displays a two-dimensional CAD model, and the user can edit the two-dimensional CAD model.

For example, as illustrated in B of Fig. 2, the terminal apparatus 112 displays a three-dimensional CAD model, and the user can edit the three-dimensional CAD model.

For example, as illustrated in C of Fig. 2, the terminal apparatus 112 displays a two-dimensional object such as a design drawing or a specification, and the user can check the design drawing, the specification, or the like.

Fig. 3 illustrates a display example of the XR space by the terminal apparatus 112.

A display 151, a keyboard 152, a mouse 153, and a desk 154 of the information processing apparatus 111 are displayed as video see-through based on a real image of a real space. A two-dimensional image by the terminal apparatus 112, on the other hand, is superimposed on the display 151 as a virtual monitor. For example, a two-dimensional CAD model to be designed is displayed on the virtual monitor. The two-dimensional CAD model displayed on the virtual monitor is preferably operated using the keyboard 152 and the mouse 153, for example, from the viewpoint of high accuracy of position detection and ease of position holding.

Furthermore, in this example, the terminal apparatus 112 displays, in front of the display 151, a three-dimensional CAD model 155 to be designed.

The CAD model 155 is operated by, for example, a controller device 113a held by the user's dominant hand (in this example, a right hand) and a controller device 113b, which is a ring-type device worn on an index finger of the user's non-dominant hand (in this example, a left hand).

For example, the information processing apparatus 111 recognizes positions, attitudes, and behavior of the user's hand holding the controller device 113a and the user's hand wearing the controller device 113b by performing hand tracking on the basis of images captured by the imaging units included in the terminal apparatus 112. Furthermore, for example, the information processing apparatus 111 receives controller signals from the controller device 113a and the controller device 113b via the terminal apparatus 112, and recognizes operations performed by the controller device 113a and the controller device 113b on the CAD model 155 on the basis of the controller signals.

For example, the user can grasp, release, or move and rotate the CAD model 155 with 6DoF using the controller device 113a or the controller device 113b.

Note that, for example, in a case where the user moves his/her hand on which the controller device 113a or the controller device 113b is worn without grasping the CAD model 155, the CAD model 155 may remain still, or the CAD model 155 may move in such a way as to move a virtual point.

For example, the user can point at any point, line, surface, or the like of the CAD model 155 with a ray (virtual ray) or the like using the controller device 113a. For example, the user can perform line drawing, in which a line is drawn on the CAD model 155, using the controller device 113a.

For example, the user can edit (for example, model, wire, disassemble, etc.) the CAD model 155 using the controller device 113a or the controller device 113b.

### <Configuration Examples of Information Processing Apparatus 111 and Terminal Apparatus 112>

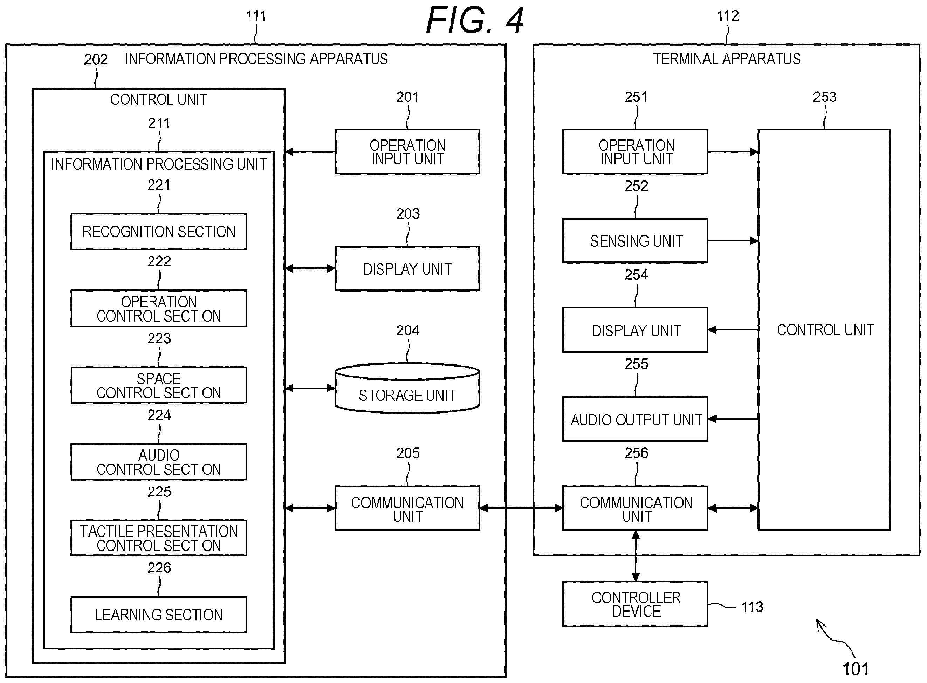

Fig. 4 is a block diagram illustrating configuration examples of functions of the information processing apparatus 111 and the terminal apparatus 112 of the XR system 101.

The information processing apparatus 111 includes an operation input unit 201, a control unit 202, a display unit 203, a storage unit 204, and a communication unit 205.

The operation input unit 201 includes, for example, input devices such as a keyboard and a mouse. The operation input unit 201 receives a user's operation input and supplies an operation input signal indicating content of the user's operation input to the control unit 202.

The control unit 202 includes, for example, an electronic circuit such as a CPU or a microprocessor. Furthermore, the control unit 202 may include a ROM that stores programs to be used, operation parameters, and the like, and a RAM that temporarily stores parameters and the like that change as appropriate.

For example, the control unit 202 functions as an arithmetic processing device and a control device, and controls overall operation of the information processing apparatus 111 and performs various processes in accordance with various programs.

For example, the control unit 202 achieves the information processing unit 211 by executing an XR app capable of editing user experience and virtual objects in the information processing apparatus 111 and the XR space. The information processing unit 211 includes a recognition section 221, an operation control section 222, a space control section 223, an audio control section 224, a tactile presentation control section 225, and a learning section 226. That is, the recognition section 221, the operation control section 222, the space control section 223, the audio control section 224, the tactile presentation control section 225, and the learning section 226 are achieved by executing the XR app using the control unit 202. Furthermore, input and output of each component of the information processing unit 211, that is, the recognition section 221, the operation control section 222, the space control section 223, the audio control section 224, the tactile presentation control section 225, and the learning section 226 are executed via the XR app.

The recognition section 221 recognizes a state of the information processing apparatus 111, a state of the terminal apparatus 112, a state of surroundings of the terminal apparatus 112, a state of the controller device 113, a state of the user, a user operation, a state of the XR space, and the like on the basis of at least one of an operation input signal from the operation input unit 201, information from the control unit 202, information from the display unit 203, information from the communication unit 205, sensing data transmitted from the terminal apparatus 112, a controller signal transmitted from the controller device 113, information from the operation control section 222, or information from the space control section 223.

The state of the information processing apparatus 111 to be recognized includes, for example, at least one of a state of each component of the information processing apparatus 111, a state of each of applications including the XR app, a communication state between the information processing apparatus 111 and another apparatus, or various types of setting information (for example, setting values of various setting items and the like). The state of each component of the information processing apparatus 111 includes, for example, at least one of an operation state of each component, presence or absence of an abnormality, or content of the abnormality. The state of each application includes, for example, at least one of a start, an end, or an operation state of the application, presence or absence of an abnormality, or content of the abnormality. The communication state between the information processing apparatus 111 and another apparatus includes, for example, a communication state with the terminal apparatus 112 and a communication state with the controller device 113 via the terminal apparatus 112.

The state of the terminal apparatus 112 to be recognized includes, for example, at least one of a position, an attitude, or behavior of the terminal apparatus 112 or various types of setting information (for example, setting values of various setting items and the like). Note that, for example, in a case where the terminal apparatus 112 is worn by the user, the position, attitude, and behavior of the terminal apparatus 112 indirectly indicate a position, an attitude, and behavior of a body part of the user wearing the terminal apparatus 112.

The state of the surroundings of the terminal apparatus 112 to be recognized includes, for example, at least one of a type, a position, an attitude, behavior, size, a shape, an appearance, or a feature value of a real object around the terminal apparatus 112 (user).

The state of the controller device 113 to be recognized includes, for example, at least one of a position, an attitude, or behavior of the controller device 113 or various types of setting information (for example, setting values of various setting items and the like).

The state of the user to be recognized includes, for example, at least one of a position, an attitude, overall behavior, behavior of a body part, or a line-of-sight direction of the user.

The user operation to be recognized includes, for example, at least one of an operation input through the operation input unit 201, an operation input through the controller device 113, an operation input through a gesture of the user, or an operation input through a virtual tool or the like in the XR space.

The state of the XR space to be recognized includes, for example, at least one of a type, a position, an attitude, behavior, size, a shape, an appearance, or a feature value of a virtual object in the XR space.

The recognition section 221 supplies information regarding recognition results to each component of the information processing apparatus 111.

The recognition section 221 also transmits the information regarding recognition results to the terminal apparatus 112 via the communication unit 205, and transmits the information to the controller device 113 via the communication unit 205 and the terminal apparatus 112. For example, in a case where the recognition section 221 detects a change or an abnormality in the state of the terminal apparatus 112 or the input device 113, the recognition section 221 transmits information indicating a result of the detection to the terminal apparatus 112 via the communication unit 205 or transmits the information to the controller device 113 via the communication unit 205 and the terminal apparatus 112. For example, in a case where the recognition section 221 detects a change (for example, a start, a stop, or the like) or an abnormality in the state of an application such as the XR app, the recognition section 221 transmits information indicating a result of the detection to the terminal apparatus 112 via the communication unit 205, or transmits the information to the controller device 113 via the communication unit 205 and the terminal apparatus 112.

Note that any method of image recognition, object recognition, or the like, for example, can be used for recognition processing of various recognition targets by the recognition section 221.

Furthermore, for example, in a case where a plurality of users shares the XR space, for example, the recognition section 221 performs the recognition processing for each user. For example, the recognition section 221 recognizes a state of the terminal apparatus 112 of each user, a state of an area around the terminal apparatus 112 of each user, a state of the controller device 113 of each user, a state of each user, and a user operation performed by each user. Results of the recognition processing for each user may be shared between the users, for example, by transmitting the results to the terminal apparatus 112 or the controller device 113 of each user.

The operation control section 222 controls operation processing by the controller device 113 on the basis of at least one of recognition results from the recognition section 221 or a controller signal transmitted from the controller device 113.

For example, the operation control section 222 controls operation processing by the controller device 113 on the basis of at least one of the position and attitude of the controller device 113 or the controller signal. For example, the operation control section 222 controls enabling or disabling of each operation member included in the controller device 113, a function assigned to each operation member, a method for operating the function assigned to each operation member, or the like on the basis of a mounting method, a holding method, a use method, and the like of the controller device 113.

The operation control section 222 supplies information regarding control of the operation processing by the controller device 113 to each unit of the information processing apparatus 111.

The space control section 223 controls presentation of a two-dimensional space or a three-dimensional space by the display unit 203 and presentation of an XR space by the terminal apparatus 112 on the basis of at least a subset of the recognition results from the recognition section 221.

For example, the space control section 223 generates a display object to be displayed in a two-dimensional space or a three-dimensional space on the basis of at least a subset of the recognition results from the recognition section 221, and performs various arithmetic operations necessary for construction, display, and the like of the two-dimensional space or the three-dimensional space including behavior of the display object. The space control section 223 generates display control information for controlling the display of the two-dimensional space or the three-dimensional space on the basis of results of the arithmetic operations and supplies the display control information to the display unit 203 to control the display of the two-dimensional space or the three-dimensional space by the display unit 203. Note that the display control information may include, for example, information for using the two-dimensional space or the three-dimensional space (for example, an operation menu, guidance, messages, and the like) and information for notifying of the state of the information processing apparatus 111 (for example, setting information, remaining battery charge, error display, and the like).

For example, the space control section 223 generates a virtual object to be displayed in an XR space on the basis of at least a subset of the recognition results from the recognition section 221, and performs various arithmetic operations necessary for construction, display, and the like of the XR space including behavior of the virtual object. The recognition results from the recognition section 221 include, for example, operation content for the controller device 113a recognized by the recognition section 221 on the basis of the controller signal or the like including the operation input signal from the controller device 113a. The space control section 223 generates display control information for controlling the display of the XR space on the basis of results of the arithmetic operations and transmits the display control information to the terminal apparatus 112 via the communication unit 205 to control the display of the XR space by the terminal apparatus 112. Note that the display control information may include, for example, information for using the XR space (for example, an operation menu, guidance, messages, and the like) and information for notifying of the state of the XR system 101 (for example, setting information, remaining battery charge, error display, and the like).

The space control section 223 supplies information regarding a two-dimensional space, a three-dimensional space, and an XR space to each component of the information processing apparatus 111.

The audio control section 224 controls output of a sound by the terminal apparatus 112 on the basis of at least one of the recognition results from the recognition section 221 or the information from the space control section 223. For example, the space control section 223 generates audio control information for outputting a sound in the terminal apparatus 112. The audio control information includes, for example, information regarding at least one of a type, content, a frequency, amplitude, or a waveform of a sound to be output. The audio control section 224 controls the output of a sound by the terminal apparatus 112 by transmitting the audio control information to the terminal apparatus 112 via the communication unit 205.

The tactile presentation control section 225 controls presentation of a tactile stimulus to the user on the basis of at least one of the recognition results from the recognition section 221 or the information from the space control section 223. For example, the tactile presentation control section 225 generates tactile control information for presenting a tactile stimulus in the controller device 113. The tactile control information includes, for example, information regarding at least one of a type, a pattern, strength, or length of a tactile sensation to be presented. The tactile presentation control section 225 controls presentation of a tactile stimulus by the controller device 113 by transmitting tactile control information to the controller device 113 via the communication unit 205 and the terminal apparatus 112.

The learning section 226 performs learning processing related to processing of the XR system 101 on the basis of at least one of the recognition results from the recognition section 221 or learning data given from the outside. For example, the learning section 226 learns the user's taste, action pattern, and the like, and adjusts various processes and parameters of the XR system 101 on the basis of learning results in such a way as to appropriately respond to the user's taste, action pattern, and the like. For example, the learning section 226 learns differences between an XR space and a real space, and adjusts design data and the like on the basis of the learning results in such a way as to bring characteristics, behavior, and the like of a virtual object in the XR space closer to those of a real object.

The learning section 226 stores, for example, information (for example, a learning model or the like) indicating the learning results in the storage unit 204.

Note that the control unit 202 may execute not only the XR app but also other applications.

The storage unit 204 includes, for example, a read only memory (ROM) that stores programs, operation parameters, and the like to be used for processing by the control unit 202 and a random access memory (RAM) that temporarily stores parameters and the like that change as appropriate.

The communication unit 205 communicates with external devices to transmit and receive data. For example, the communication unit 205 communicates with the terminal apparatus 112 to transmit and receive data. For example, the communication unit 205 transmits the display control information, the audio control information, and the tactile control information to the terminal apparatus 112. For example, the communication unit 205 receives the sensing data and the controller signal from the terminal apparatus 112.

The communication method of the communication unit 205 may be wired or wireless, and for example, a wired LAN, a wireless LAN, Wi-Fi, Bluetooth, or the like is used. Furthermore, the communication unit 205 may support two or more types of communication methods.

The terminal apparatus 112 includes an operation input unit 251, a sensing unit 252, a control unit 253, a display unit 254, an audio output unit 255, and a learning section 226.

The operation input unit 251 includes, for example, an operation input device such as buttons. The operation input unit 201 receives the user's operation input and supplies an operation input signal indicating content of the user's operation input to the control unit 253. For example, the operation input unit 251 receives an operation input by the user, such as turning on or off of the terminal apparatus 112 and adjustment of brightness of the display unit 254.

The sensing unit 252 includes various sensors for sensing the terminal apparatus 112, the surroundings of the terminal apparatus 112, and the state of the user. For example, the sensing unit 252 includes a camera or a depth sensor for capturing an image of the surroundings of the terminal apparatus 112. For example, the sensing unit 252 includes a camera or a depth sensor for capturing an image of the user's eyes. For example, the sensing unit 252 includes an inertial measurement unit (IMU) for detecting acceleration, angular velocity, and the like of the terminal apparatus 112. For example, the sensing unit 252 includes a global navigation satellite system (GNSS) receiver for detecting a current position of the terminal apparatus 112 (user). The sensing unit 252 supplies sensing data indicating a detection result of at least one of the sensors to the control unit 253.

The control unit 253 includes, for example, an electronic circuit such as a CPU or a microprocessor. Furthermore, the control unit 253 may include a ROM that stores programs to be used, operation parameters, and the like, and a RAM that temporarily stores parameters and the like that change as appropriate.

For example, the control unit 253 functions as an arithmetic processing device and a control device, and controls overall operation of the terminal apparatus 112 and performs various processes in accordance with various programs on the basis of the operation input signal from the operation input unit 251, the sensing data from the sensing unit 252, the display control information and the audio control information from the information processing apparatus 111, the controller signal from the controller device 113, and the like. For example, the control unit 253 controls the display of an XR space and the like by the display unit 254 on the basis of the display control information. For example, the control unit 253 controls the output of a sound by the audio output unit 255 on the basis of the audio control information.

The display unit 254 includes various display devices. For example, in a case where the terminal apparatus 112 is an HMD, the display unit 254 includes displays fixed in relation to the left and right eyes of the user, and displays a left-eye image and a right-eye image. The display includes, for example, a display panel such as a liquid crystal display or an organic electro luminescence (EL) display, or a laser scanning display such as a retinal scan display. Furthermore, the display unit 254 may include, for example, an imaging optical system that enlarges and projects display screens to form enlarged virtual images having a predetermined view angle on the user's pupils. For example, the display unit 254 displays an XR space including a virtual object under the control of the control unit 253.

The audio output unit 255 includes, for example, an audio output device such as headphones, earphones, or a speaker. The audio output unit 255 outputs a sound under the control of the control unit 253.

The communication unit 256 communicates with external devices to transmit and receive data. For example, the communication unit 256 communicates with the terminal apparatus 112 and the controller device 113 to transmit and receive data. For example, the communication unit 256 transmits sensing data and a controller signal to the information processing apparatus 111. For example, the communication unit 256 receives the display control information, the audio control information, and the tactile control information from the information processing apparatus 111. For example, the communication unit 256 transmits the tactile control information to the controller device 113. For example, the communication unit 256 receives a controller signal from the controller device 113.

The communication method of the communication unit 256 may be wired or wireless, and for example, a wired LAN, a wireless LAN, Wi-Fi, Bluetooth, or the like is used. Furthermore, the communication unit 256 may support two or more types of communication methods. Moreover, the communication unit 256 may communicate with the information processing apparatus 111 and the controller device 113 using different communication methods.

The following is an example of processing by the information processing apparatus 111 using the XR app.

For example, the communication unit 205 receives input information indicating at least one of the state of the terminal apparatus 112, the state of the surroundings of the terminal apparatus 112, the state of the user, the behavior of the user, or an operation input to the input device 113 from the terminal apparatus 112 or the controller device 113 via the terminal apparatus 112, and supplies the input information to the control section 221. The control section 221 executes the XR app on the basis of the input information, generates output information for controlling display of a virtual object including CAD information regarding CAD in the XR space, and outputs the output information to the terminal apparatus 112. The communication unit 205 transmits the output information to the terminal apparatus 112.

Furthermore, for example, the control section 221 executes the XR app and outputs output information indicating a change or an abnormality in a state of the XR app to the terminal apparatus 112 or the controller device 113. The communication unit 205 transmits the output information to the terminal apparatus 122 or to the controller device 113 via the terminal apparatus 112.

The terminal apparatus 112, on the other hand, for example, notifies of a change or an abnormality in the state of the XR app by an image, a message, a sound, vibration, or the like on the basis of the output information. For example, the controller device 113 notifies of a change or an abnormality in the state of the XR app by vibration or the like on the basis of the output information.

Note that in a case where each component of the information processing apparatus 111 communicates with the outside via the communication unit 205 in the following description, description of the communication unit 205 might be omitted. For example, in a case where the space control section 223 of the information processing apparatus 111 communicates with the terminal apparatus 112 via the communication unit 205, it might be simply described that the space control section 223 of the information processing apparatus 111 communicates with the terminal apparatus 112.

In a case where each component of the terminal apparatus 112 communicates with the outside via the communication unit 256 in the following description, description of the communication unit 256 might be omitted. For example, in a case where the control unit 253 of the terminal apparatus 112 communicates with the information processing apparatus 111 via the communication unit 256, it might be simply described that the control unit 253 of the terminal apparatus 112 communicates with the information processing apparatus 111.

For example, in the XR system 101, the space control section 223 of the information processing apparatus 111 generates the display control information and transmits the display control information to the terminal apparatus 112 via the communication unit 205, and the control unit 253 of the terminal apparatus 112 receives the display control information via the communication unit 256 and controls the display unit 254 on the basis of the display control information. In the following description, description of the series of processing might be simplified, and for example, it might be described that the space control section 223 of the information processing apparatus 111 controls the display unit 254 of the terminal apparatus 112.

For example, in the XR system 101, the audio control section 224 of the information processing apparatus 111 generates audio control information and transmits the audio control information to the terminal apparatus 112 via the communication unit 205, and the control unit 253 of the terminal apparatus 112 receives the audio control information via the communication unit 256 and controls the audio output unit 255 on the basis of the audio control information. In the following description, description of the series of processing might be simplified, and for example, it might be described that the audio control section 224 of the information processing apparatus 111 controls the audio output unit 255 of the terminal apparatus 112.

For example, in the XR system 101, the tactile presentation control section 225 of the information processing apparatus 111 generates tactile control information and transmits the tactile control information to the controller device 113 via the communication unit 205 and the terminal apparatus 112, and the controller device 113 presents a tactile stimulus on the basis of the tactile control information. In the following description, description of the series of processing might be simplified, and for example, it might be described that the tactile presentation control section 225 of the information processing apparatus 111 controls the controller device 113 via the terminal apparatus 112.

### <Configuration Example of Controller Device 113a>

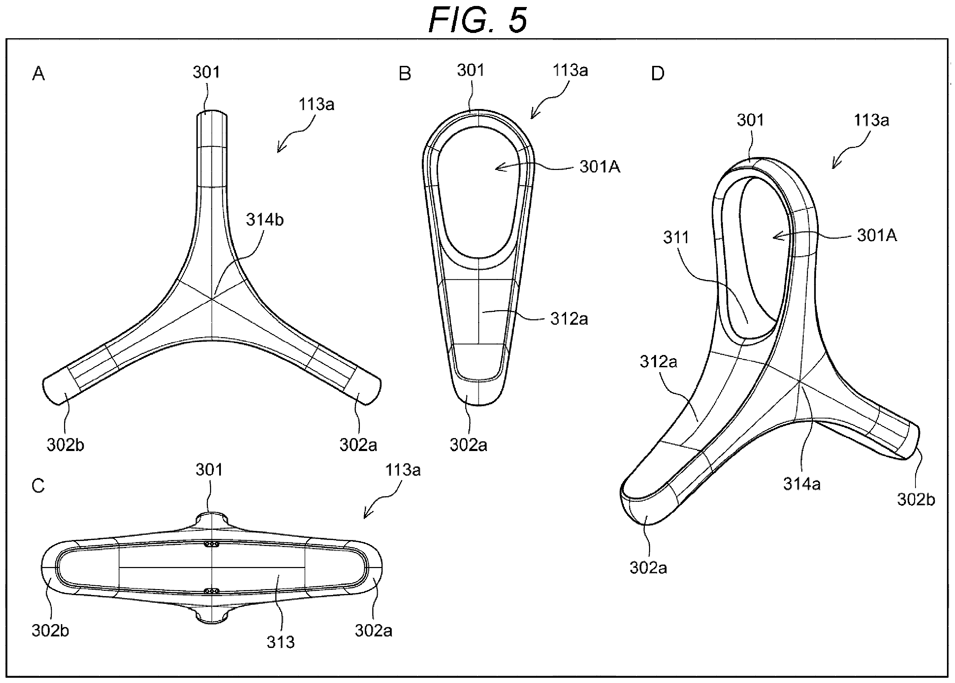

Next, a configuration example of the controller device 113a of Fig. 3 will be described with reference to Figs. 5 to 14.

Fig. 5 illustrates a configuration example of appearances of the controller device 113a. A of Fig. 5 is a left side view of the controller device 113a. B of Fig. 5 is a front view of the controller device 113a. C of Fig. 5 is a bottom view of the controller device 113a. D of Fig. 5 is a perspective view of the controller device 113a as viewed from obliquely front right.

Note that an upward direction in A of Fig. 5 is defined as an upward direction of the controller device 113a, and a downward direction in A of Fig. 5 is defined as a downward direction of the controller device 113a. A right direction in A of Fig. 5 is a front direction of the controller device 113a, and a left direction in A of Fig. 5 is a rear direction of the controller device 113a.

The controller device 113a has a symmetrical shape regardless of a direction in which the controller device 113a is viewed, namely front, rear, left, right, up, or down. Furthermore, in the controller device 113a, a shape of a front surface viewed from the front is similar to a shape of a rear surface viewed from the rear, and a shape of a right side surface viewed from the right is similar to a shape of a left side surface viewed from the left.

The controller device 113a is roughly divided into three parts, namely a ring portion 301, an operation portion 302a, and a holding portion 302b.

As illustrated in A of Fig. 5, the ring portion 301 extends upward from the vicinity of a center of gravity of a left side surface 314b. The operation portion 302a and the holding portion 302b have symmetrical shapes about the ring portion 301 when viewed from a direction of a side surface (for example, the left side surface 314b of the controller device 113a) of the ring portion 301. The operation portion 302a extends forward and obliquely downward from the vicinity of the center of gravity of the left side surface 314b (the vicinity of a lower end of the ring portion 301). The holding portion 302b extends rearward and obliquely downward from the vicinity of the center of gravity of the left side surface 314b (the vicinity of the lower end of the ring portion 301) in symmetry with the operation portion 302a. In a case where a tip of the ring portion 301, a tip of the operation portion 302a, and a tip of the holding portion 302b are connected to one another, an isosceles triangle having the tip of the ring portion 301 as a vertex is formed. An angle between the ring portion 301 and the operation portion 302a, an angle between the ring portion 301 and the holding portion 302b, and an angle between the operation portion 302a and the holding portion 302b are each about 120 degrees, and the above-described isosceles triangle is a substantially equilateral triangle.

Tips of side surfaces of the ring portion 301 extends linearly, and roots extend in curved shapes. Tips of side surfaces of the operation portion 302a extend linearly, and roots extend in curved shapes. Tips of side surfaces of the holding portion 302b extend linearly, and roots extend in curved shapes. A boundary portion between the ring portion 301 and the operation portion 302a, a boundary portion between the ring portion 301 and the holding portion 302b, and a boundary portion between the operation portion 302a and the holding portion 302b are curved.

As illustrated in B of Fig. 5, a hole 301A penetrating in a front-rear direction is formed in the ring portion 301. An outer periphery of the ring portion 301 gently expands toward the tip, and the tip is curved. Similarly, the hole 301A spreads gently toward the tip, and the tip and an end are curved.

As illustrated in B of Fig. 5, the operation portion 302a gradually tapers toward the tip, and the tip is curved. An upper surface 312a of the operation portion 302a is inclined forward and obliquely downward. A shallow groove curved in a lateral direction and extending in the front-rear direction is formed in the upper surface 312a of the operation portion 302a. A tip of the upper surface 312a of the operation portion 302a is slightly recessed with respect to the tip of the operation portion 302a. As a result, in a case where the user's finger is inserted into the hole 301A of the ring portion 301 from the rear to the front, the inserted finger can be easily placed on the upper surface 312a of the operation portion 302a.

The holding portion 302b has the same shape as the operation portion 302a, and an upper surface 312b (not illustrated) having the same shape as the upper surface 312a is formed.

As illustrated in C of Fig. 5, a bottom surface 313 curved in the front-rear direction is formed by a lower surface of the operation portion 302a and a lower surface of the holding portion 302b. A shallow groove curved in the lateral direction and extending in the front-rear direction is formed in the bottom surface 313.

A rubber-like material such as silicone or elastomer, for example, is used for an inner peripheral surface 311, the upper surface 312a, the upper surface 312b, and the bottom surface 313 of the controller device 113a. For other portions of the controller device 113a, for example, an IR transmissive resin is used.

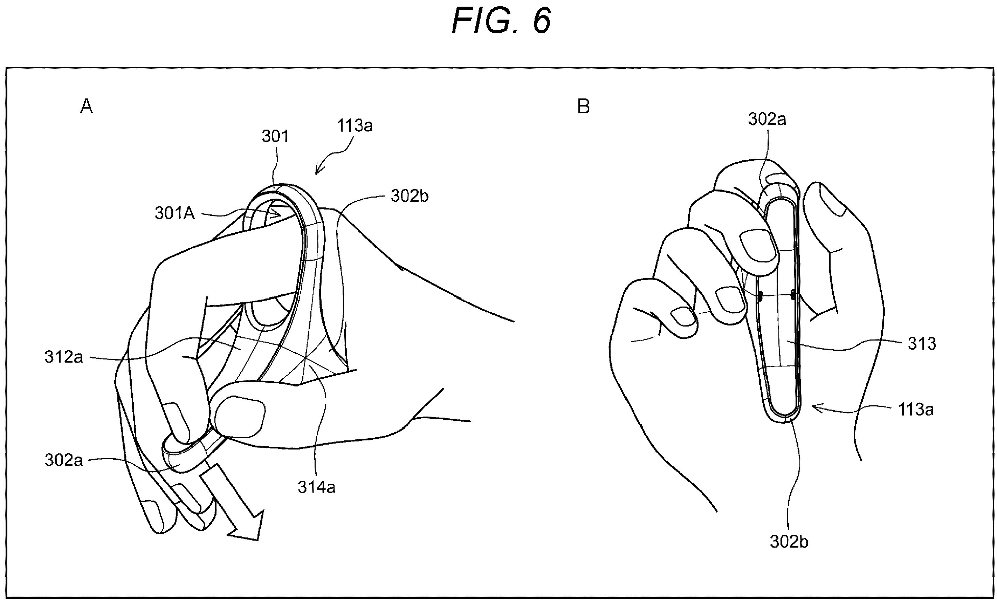

Figs. 6 to 8 illustrate examples of a method for holding the controller device 113a.

For example, as illustrated in A of Fig. 6, an index finger of a right hand is inserted into the ring portion 301 from the back to the front, a tip of the index finger is placed near the tip of the upper surface 312a of the operation portion 302a, and the operation portion 302a can be operated by the index finger. Since size of the hole 301A of the ring portion 301 is slightly larger than thickness of the index finger, the index finger can be easily inserted. A tip of a thumb of the right hand is lightly placed near the tip of the side surface of the operation portion 302a, and the holding portion 302b is lightly gripped and held by a palm of the right hand.

For example, as indicated by an arrow in A of Fig. 6, in a case where the vicinity of the tip of the operation portion 302a is pressed downward by the index finger, the tip of the holding portion 302b comes into contact with the palm as illustrated in B of Fig. 6, and the controller device 113a is prevented from rotating in a pressing direction. As a result, the vicinity of the tip of the operation portion 302a is prevented from shaking in space, and the user can reliably press the vicinity of the tip of the operation portion 302a in a state where a direction of the tip of the operation portion 302a is stable.

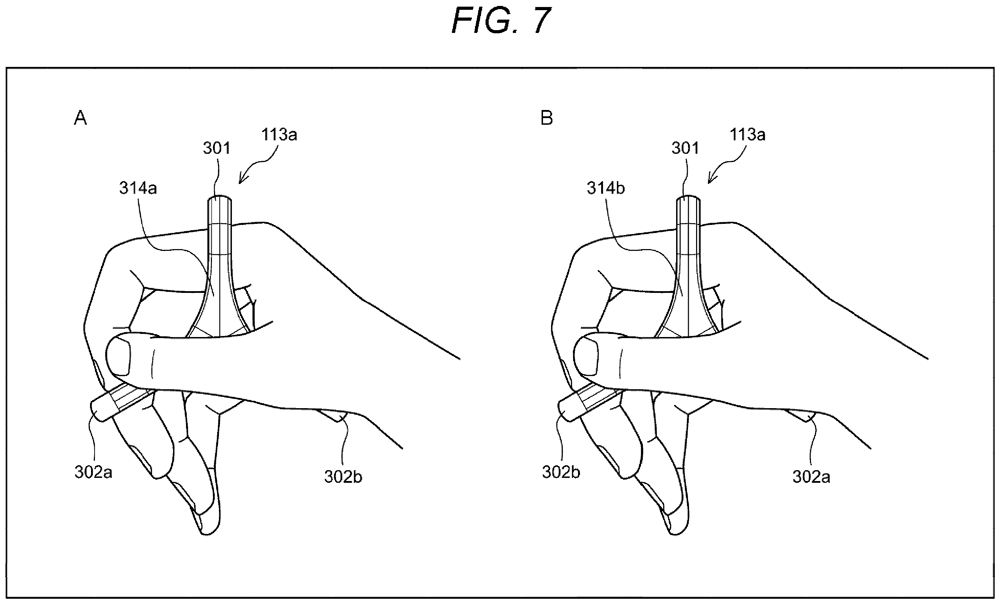

Furthermore, as described above, shapes of the controller device 113a viewed from the front and the rear are similar to each other, and shapes of the controller device 113a viewed from the right and the left are similar to each other. The user, therefore, can hold the controller device 113a without worrying about the front and the rear. That is, as illustrated in A of Fig. 7, the user can hold the controller device 113a such that the operation portion 302a faces a direction of a fingertip and a right side surface 314a faces a direction of the thumb. Alternatively, as illustrated in B of Fig. 7, the user can hold the controller device 113b such that the holding portion 302b faces the direction of the fingertip and the left side surface 314b faces the direction of the thumb.

Note that, as illustrated in A of Fig. 7, holding the controller device 113a such that the operation portion 302a faces the fingertip will be referred to as holding the controller device 113a forward hereinafter. As illustrated in B of Fig. 7, holding the controller device 113a such that the holding portion 302b faces the fingertip will be referred to as holding the controller device 113a backward hereinafter.

In a case where the controller device 113a is held backward, roles of the operation portion 302a and the holding portion 302b are switched. That is, the holding portion 302b functions as an operation portion that can be operated by the index finger of the right hand, and the operation portion 302a functions as a holding portion held by the palm of the right hand.

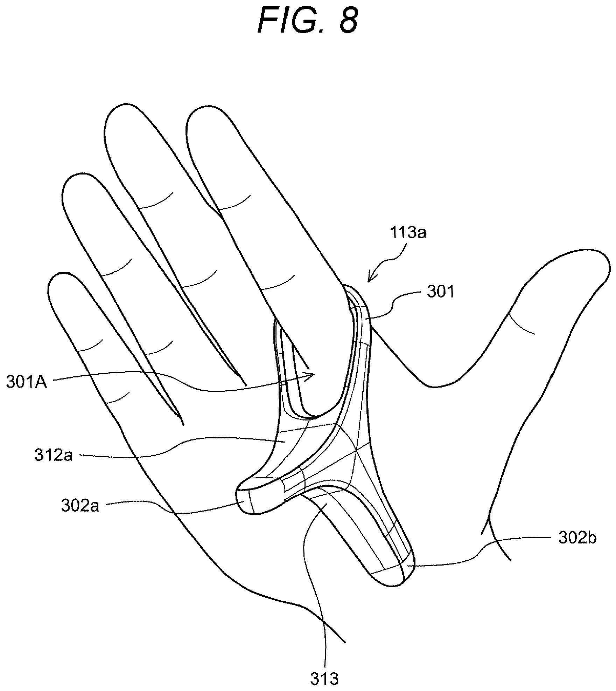

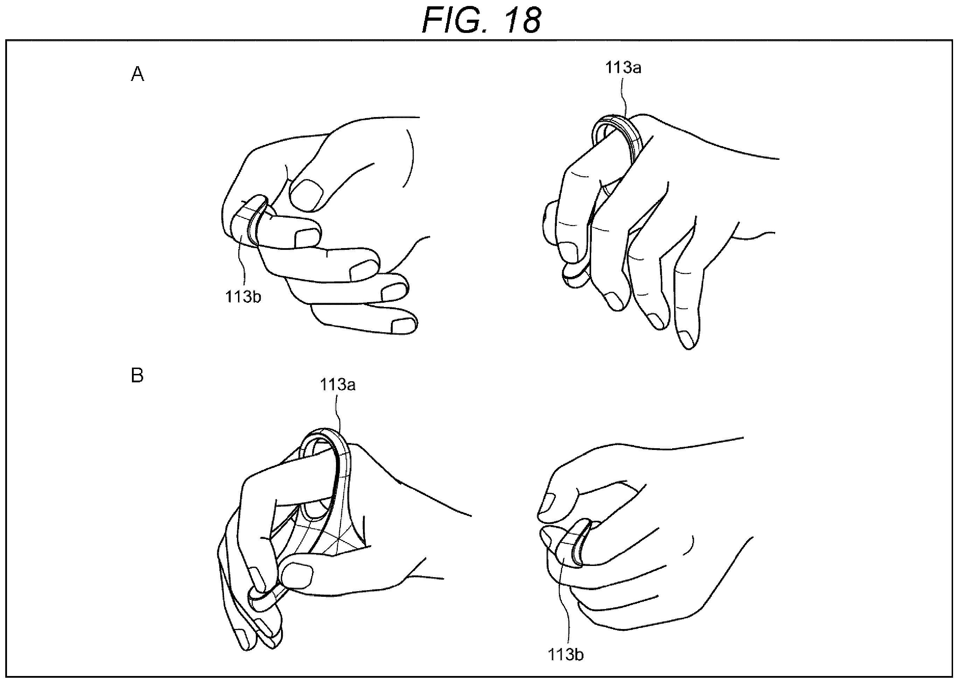

Furthermore, as illustrated in Fig. 8, even if the user releases his/her hand from the controller device 113a, the ring portion 301 is caught by the index finger, and the controller device 113a does not fall. This prevents the user from unexpectedly dropping the controller device 113a without providing a strap or the like.

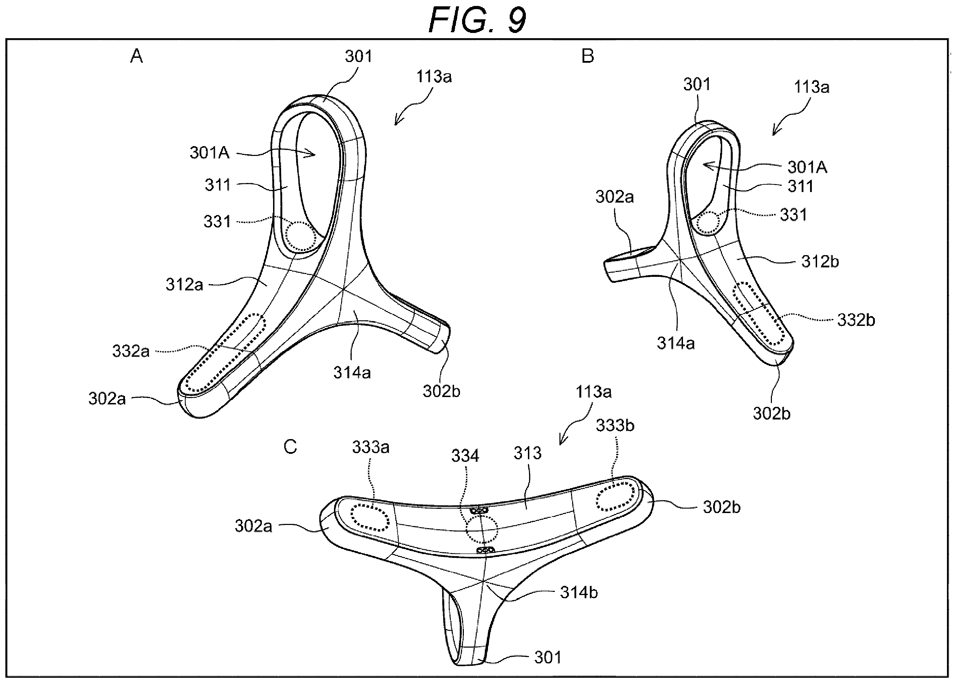

Fig. 9 illustrates an arrangement example of the operation members of the controller device 113a. A of Fig. 9 is a perspective view of the controller device 113a as viewed from obliquely upper right. B of Fig. 9 is a perspective view of the controller device 113a as viewed from obliquely upper left. C of Fig. 9 is a perspective view of the controller device 113a as viewed from obliquely rear downward.

The individual operation members are disposed symmetrically about the ring portion 301 in the front-rear direction and a left-right direction of the controller device 113a.

For example, an operation member 331 is disposed at the lower end of the inner peripheral surface 311 (hole 301A) of the ring portion 301. For example, the user bends his/her index finger and operates the operation member 331 with the fingertip of the index finger.

An operation member 332a is disposed near the tip of the upper surface 312a of the operation portion 302a. An operation member 332b is disposed near the tip of the upper surface 312b of the holding portion 302b. For example, the user operates the operation member 332a or the operation member 332b with the fingertip of his/her index finger.

An operation member 333a and an operation member 333b are disposed near a front end and a rear end of the bottom surface 313, respectively. For example, the user operates the operation member 333a or the operation member 333b with a fingertip of his/her ring finger or little finger.

An operation member 334 is disposed at a center of the bottom surface 313 in the front-rear direction. For example, the user operates the operation member 334 with a fingertip of his/her thumb, ring finger, or little finger.

Any type of operation member such as a button, a touch pad, or a joystick, for example, may be used as each of the operation member 331, the operation member 332a, the operation member 332b, the operation member 333a, the operation member 333b, and the operation member 334. The same type of operation member, however, is used as the operation member 332a and the operation member 332b arranged at symmetrical positions about the ring portion 301. Similarly, the same type of operation member is used as the operation member 333a and the operation member 333b arranged at symmetrical positions about the ring portion 301.

Any function can be assigned, for example, to each of the operation member 331, the operation member 332a, the operation member 332b, the operation member 333a, the operation member 333b, and the operation member 334. The same function is assigned, however, to the operation member 332a and the operation member 332b arranged at symmetrical positions about the ring portion 301. Similarly, the same function is assigned to the operation member 333a and the operation member 333b arranged at symmetrical positions about the ring portion 301.

Specifically, for example, a function of calling a main menu screen is assigned to the operation member 331. For example, a function of selecting a virtual object is assigned to the operation member 332a and the operation member 332b. For example, functions other than the selection function of the operation member 332a and the operation member 332b are assigned to the operation member 333a and the operation member 333b. For example, a function of calling a sub menu screen is assigned to the operation member 334.

Note that, for example, different functions may be assigned to the operation member 332a and the operation member 332b, and these functions may be switched depending on a direction in which the controller device 113a is held. Similarly, for example, different functions may be assigned to the operation member 333a and the operation member 333b, and these functions may be switched depending on a direction in which the controller device 113a is held.

The user can thus perform similar operations regardless of whether the user holds the controller device 113a forward or backward.

Note that although it is assumed that an index finger is inserted into the ring portion 301, for example, a middle finger or a ring finger may be inserted and used.

Note that in a case where it is not necessary to distinguish the operation member 332a and the operation member 332b from each other, they will be simply referred to as the operation members 332 hereinafter. In a case where it is not necessary to distinguish the operation member 333a and the operation member 333b from each other, they will be simply referred to as the operation members 333 hereinafter.

### <Arrangement Examples of Markers>

For example, markers such as IR light-emitting elements may be provided for the controller device 113a. The recognition section 221 of the information processing apparatus 111 may then detect the markers of the controller device 113a on the basis of an image or the like sensed by the sensing unit 252 of the terminal apparatus 112, and recognize relative positions and relative attitudes of the terminal apparatus 112 and the controller device 113 on the basis of positions of the detected markers.

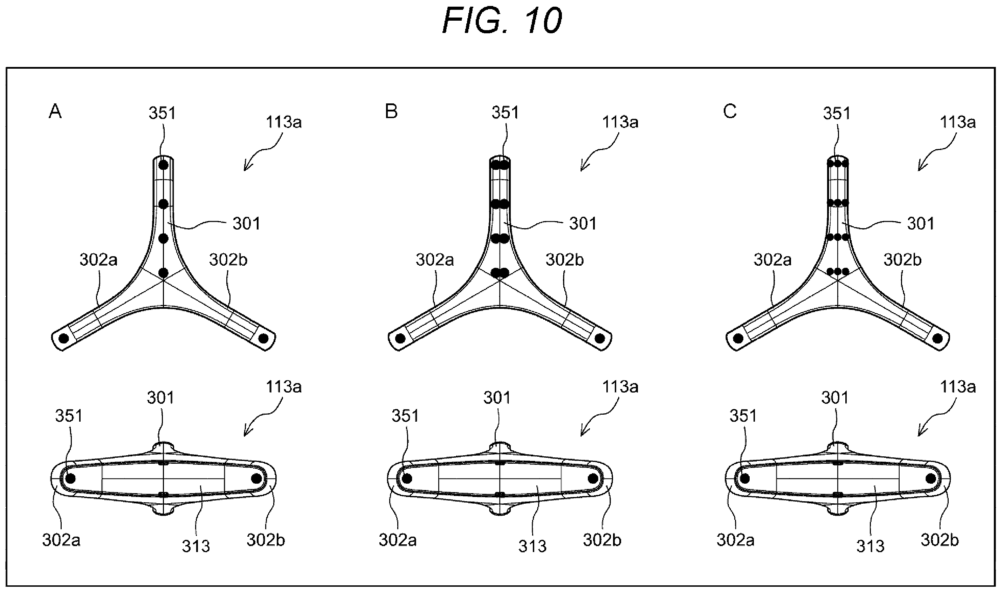

Fig. 10 illustrates arrangement examples of markers 351 of the controller device 113a. Each marker 351 is indicated by a solid circle.

For example, as illustrated in A of Fig. 10, the markers 351 are arranged in a vertical direction on the right side surface 314a and the left side surface 314b in such a way as to surround the outer periphery of the ring portion 301. For example, the markers 351 are disposed near the tips of the both side surfaces of the operation portion 302a and near the tips of the both side surfaces of the holding portion 302b. For example, the markers 351 are disposed near the front end and the rear end of the bottom surface 313.

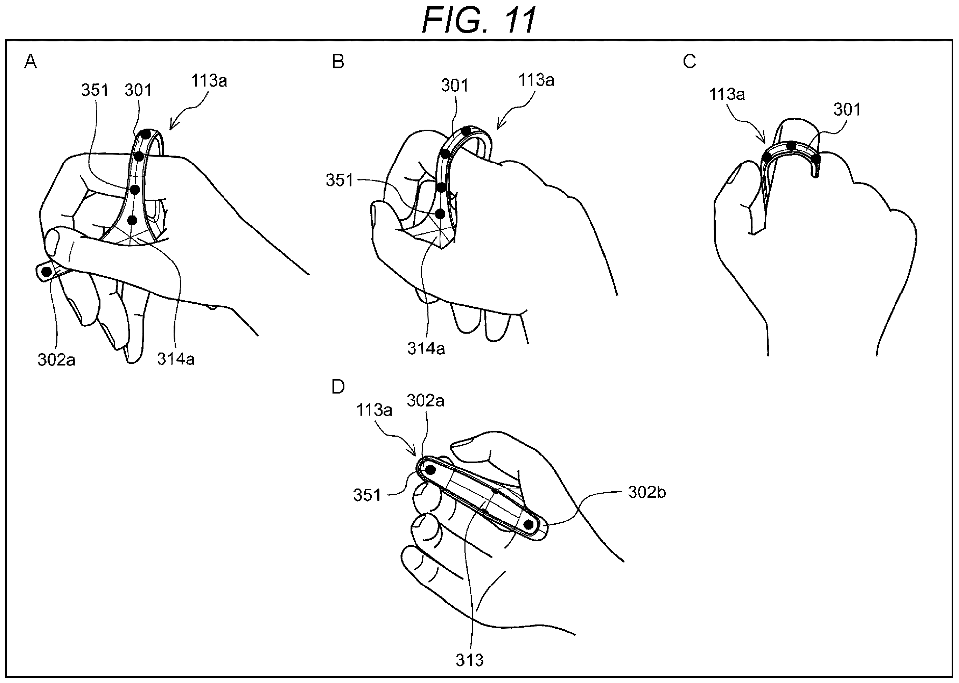

As a result, as illustrated in A to D of Fig. 11, at least a subset of the markers 351 becomes visible in any attitude of the controller device 113a without being covered by the user's hand.

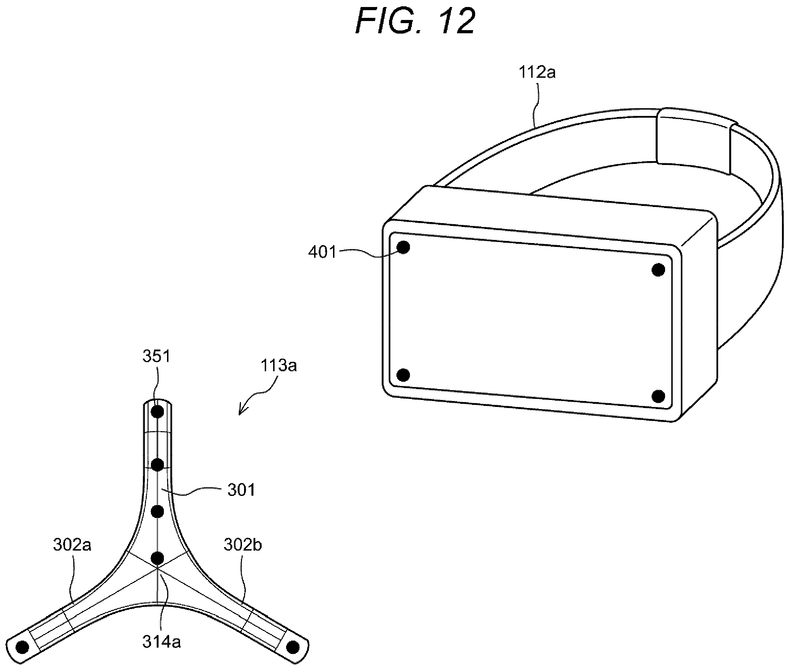

It is assumed, on the other hand, for example, that the terminal apparatus 112 includes a plurality of cameras 401 as illustrated in Fig. 12. Each camera 401 constitutes the sensing unit 252 (Fig. 4) of the terminal apparatus 112. Each camera 401 captures an image of the controller device 113a. The terminal apparatus 112 transmits sensing data including captured image data obtained by image capture to the information processing apparatus 111.

The control unit 202 of the information processing apparatus 111, on the other hand, receives the sensing data. The recognition section 221 of the control unit 202 recognizes a position and an attitude of the controller device 113a with respect to the terminal apparatus 112 on the basis of a light emission pattern of the markers 351 of the controller device 113a.

Note that, for example, as illustrated in B of Fig. 10, the markers 351 may be arranged in two rows in the lateral direction in such a way as to surround the outer periphery of the ring portion 301. Alternatively, for example, as illustrated in C of Fig. 10, the markers 351 may be arranged in three rows in the lateral direction in such a way as to surround the outer periphery of the ring portion 301.

By disposing the markers 351 on the outer periphery of the ring portion 301 like this, the controller device 113a can be downsized.

### <Example of Internal Structure of Controller Device 113a>

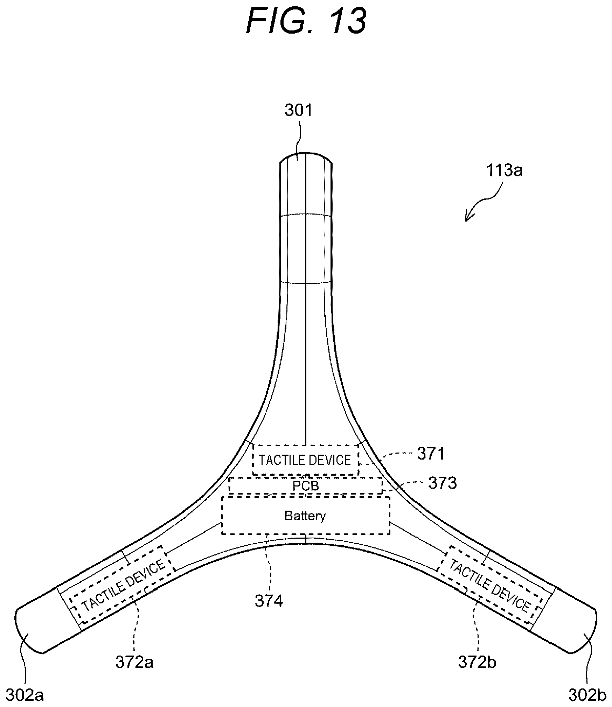

Next, an example of an internal structure of the controller device 113a will be described with reference to Fig. 13.

The controller device 113a incorporates a tactile device 371, a tactile device 372a, a tactile device 372b, a board 373, and a battery 374.

Each of the tactile device 371, the tactile device 372a, and the tactile device 372b includes, for example, a device that presents (transmits) a tactile stimulus such as vibration, namely a linear resonant actuator (LRA), an eccentric rotating mass (ERM), a piezoelectric element, or the like.

The tactile device 371 is disposed near the lower end of the inner peripheral surface 311 of the ring portion 301 (near the operation member 331 (Fig. 9)), and presents a tactile stimulus near the lower end of the inner peripheral surface 311.

The tactile device 372a is disposed near the tip of the operation portion 302a (near the operation member 332a (Fig. 9)), and transmits a tactile stimulus to the vicinity of the tip of the operation portion 302a.

The tactile device 372b is disposed near the tip of the holding portion 302b (near the operation member 332b (Fig. 9)), and transmits a tactile stimulus to the vicinity of the tip of the holding portion 302b.

The board 373 is a board for controlling the controller device 113a, and is disposed substantially at a center in the controller device 113a and below the tactile device 371.

The battery 374 is disposed in the controller device 113a below the board 373 and supplies power to each component of the controller device 113a.

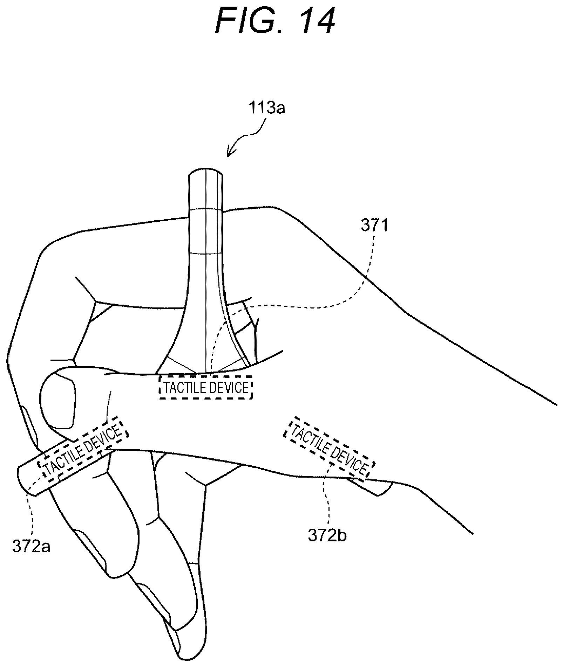

For example, as illustrated in Fig. 14, in a case where the controller device 113a is held forward by the user's right hand, the tactile device 371 presents a tactile stimulus near a base of the thumb. The tactile device 372a presents a tactile stimulus near the fingertip of the thumb and near the fingertip of the index finger. The tactile device 372b presents a tactile stimulus near the base of the thumb and the palm.

Note that the tactile device 371, the tactile device 372a, and the tactile device 372b are arranged at symmetrical positions about the ring portion 301 in the front-rear direction of the controller device 113a. Regardless of whether the user holds the controller device 113a forward or backward, therefore, similar tactile stimuli are presented to the user's hand.

### <Processing by XR system 101>

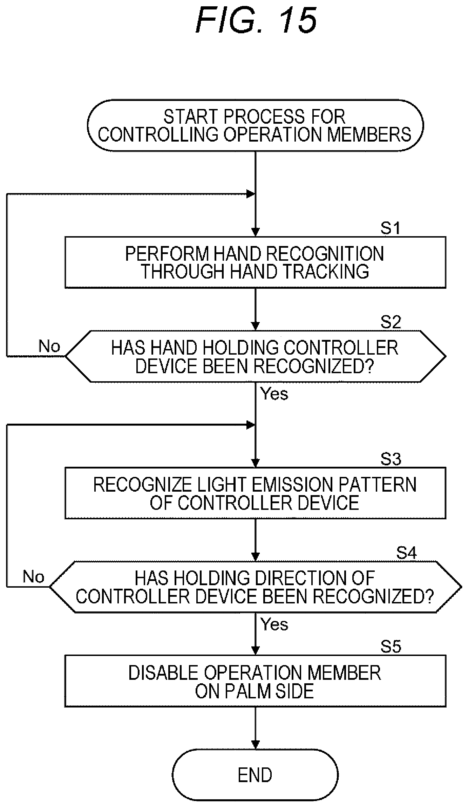

Next, processing by the XR system 101 will be described with reference to Figs. 15 to 23.

### <Process for Controlling Operation Members>

First, a process for controlling the operation members performed by the XR system 101 will be described with reference to a flowchart of Fig. 15.

This process is performed, for example, when the user holds or reholds the controller device 113a.

In step S1, the information processing apparatus 111 performs hand recognition through hand tracking.

For example, the control unit 253 of the terminal apparatus 112 transmits, to the information processing apparatus 111, sensing data including captured image data indicating an image captured by each camera 401.

The control unit 202 of the information processing apparatus 111, on the other hand, receives the sensing data. The recognition section 221 of the control unit 202 performs hand recognition through hand tracking on the basis of the captured image data included in the sensing data. As a result, for example, the recognition section 221 tracks the user's hand holding the controller device 113a on the basis of the markers 351 provided for the controller device 113a.

In step S2, the recognition section 221 determines, on the basis of a result of the processing in step S1, whether or not a hand holding the controller device 113a has been recognized. If it is determined that a hand holding the controller device 113a has not been recognized, the process returns to step S1.

Thereafter, the processing in steps S1 and S2 is repeatedly performed until it is determined in step S2 that a hand holding the controller device 113a has been recognized.

If it is determined in step S2, on the other hand, that a hand holding the controller device 113a has been recognized, the process proceeds to step S3.

In step S3, the recognition section 221 recognizes a light emission pattern of the controller device 113a on the basis of the captured image data. That is, the recognition section 221 recognizes the light emission pattern of the markers 351 not hidden by the user's hand in the controller device 113a.

In step S4, the recognition section 221 determines whether or not a holding direction of the controller device 113a has been recognized. Specifically, the recognition section 221 attempts to recognize the holding direction of the controller device 113a on the basis of a result of the recognition of the user's hand holding the controller device 113a and a result of the recognition of the light emission pattern of the controller device 113a. If it is then determined that the holding direction of the controller device 113a has not been recognized, the process returns to step S3.

Thereafter, the processing in steps S3 and S4 is repeatedly performed until it is determined in step S4 that the holding direction of the controller device 113a has been recognized.

If it is determined in step S4, on the other hand, that the holding direction of the controller device 113a has been recognized, the process proceeds to step S5.

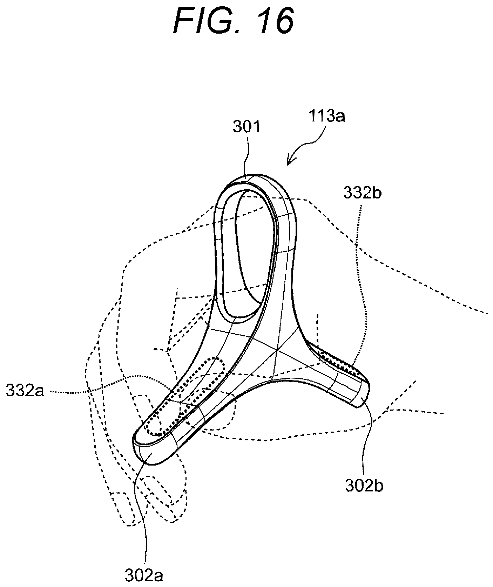

In step S5, the operation control section 222 disables an operation member on a palm side. For example, as illustrated in Fig. 16, in a case where the controller device 113a is held forward, the operation member 332b on the palm side is disabled. Thereafter, for example, the recognition section 221 and the operation control section 222 ignore the operation input signal from the operation member 332b.

In a case where the controller device 113a is held backward, on the other hand, for example, the operation member 332a on the palm side is disabled.

Thereafter, the process for controlling the operation members ends.

As a result, the operation members 332 are prevented from being erroneously operated by the user's palm.

As described above, the hand holding the controller device 113a and the holding direction are recognized, and operability of the controller device 113a does not change regardless of the holding direction of the controller device 113a.

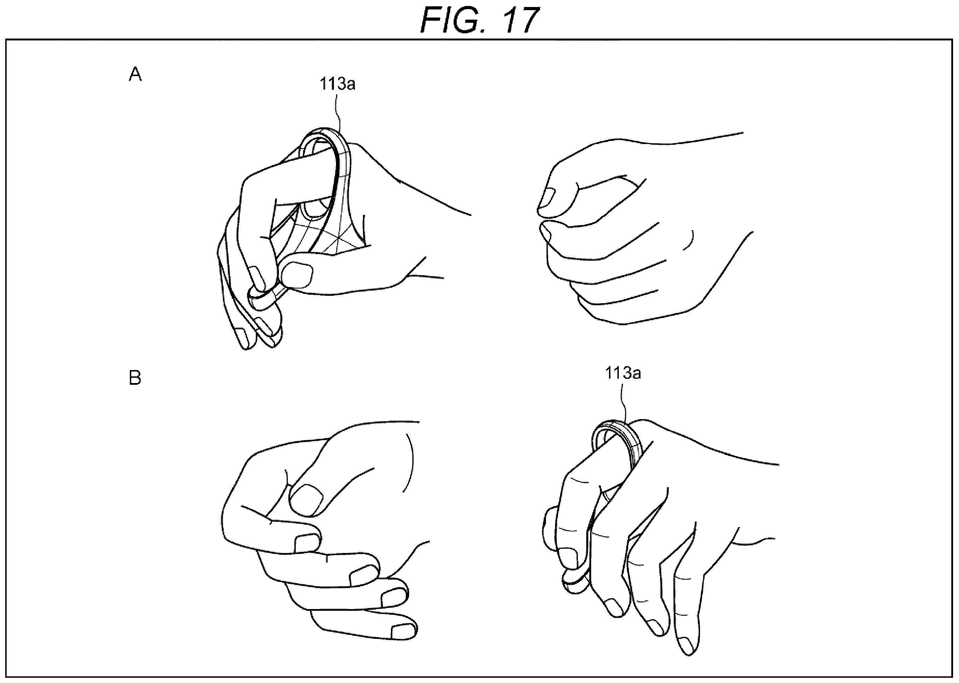

As illustrated in A and B of Fig. 17, therefore, for example, even if no special settings are made on a terminal apparatus 112 side, the user can use the controller device 113a with his/her dominant hand whichever the user's dominant hand is.

Note that, for example, as illustrated in A and B of Fig. 18, the user can wear another controller device 113b such as a ring-type device on his/her non-dominant hand side to use the controller device 113b.

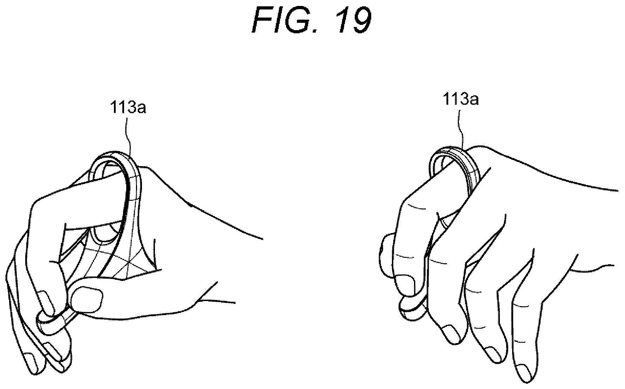

Furthermore, for example, as illustrated in Fig. 19, the user can wear controller devices 113a on both hands to use the controller devices 113a.

### <Process for Controlling Tactile Feedback>

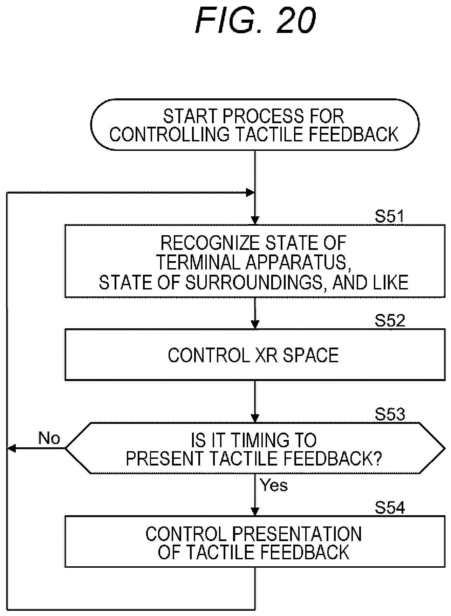

Next, a process for controlling tactile feedback performed by the XR system 101 will be described with reference to a flowchart of Fig. 20.

This process starts, for example, when the information processing apparatus 111 is turned on, and ends when the information processing apparatus 111 is turned off.

In step S51, the information processing apparatus 111 recognizes the state of the terminal apparatus 112, the state of the surroundings of the terminal apparatus 112, and the like.

Specifically, the sensing unit 252 of the terminal apparatus 112 senses the state of the terminal apparatus 112 and the state of the surroundings of the terminal apparatus 112, and supplies sensing data indicating a result of the sensing to the control unit 253. The control unit 253 transmits the sensing data to the information processing apparatus 111.

The control unit 202 of the information processing apparatus 111, on the other hand, receives the sensing data.

The controller device 113a transmits a controller signal including an operation input signal indicating operation content for each operation member to the information processing apparatus 111 via the terminal apparatus 112.

The control unit 202 of the information processing apparatus 111, on the other hand, receives the controller signal.

The recognition section 221 of the control unit 202 recognizes the state of the terminal apparatus 112, the state of the surroundings of the terminal apparatus 112, the state of the controller device 113, the state of the user, a user operation, and the like on the basis of the sensing data and the controller signal. For example, the recognition section 221 recognizes the position and attitude of the terminal apparatus 112. For example, the recognition section 221 recognizes the line-of-sight direction of the user. For example, the recognition section 221 recognizes the position and attitude of the controller device 113a with respect to the terminal apparatus 112. For example, the recognition section 221 recognizes operation content for the controller device 113a.

In step S52, the space control section 223 of the information processing apparatus 111 controls an XR space. Specifically, the space control section 223 generates a virtual object to be displayed in an XR space on the basis of at least a subset of the recognition results from the recognition section 221, and performs various arithmetic operations necessary for construction, display, and the like of the XR space including behavior of the virtual object. The space control section 223 generates display control information for controlling the display of the XR space on the basis of results of the arithmetic operations and transmits the display control information to the terminal apparatus 112 via the communication unit 205 to control the display of the XR space by the terminal apparatus 112.

The recognition section 221 recognizes types, positions, attitudes, and the like of virtual objects around the terminal apparatus 112 (user) on the basis of the information and the like from the space control section 223.

In step S53, the tactile presentation control section 225 determines whether or not it is a timing to present tactile feedback on the basis of at least one of the recognition results from the recognition section 221 or the information from the space control section 223. If it is determined that it is not the timing to present tactile feedback, the process returns to step S51.

Thereafter, the processing in steps S51 to S53 is repeatedly performed until it is determined in step S53 that it is the timing to present tactile feedback.

If it is determined in step S53, on the other hand, that it is the timing to present tactile feedback, the process proceeds to step S54.

In step S54, the information processing apparatus 111 controls presentation of tactile feedback. Specifically, the tactile presentation control section 225 generates tactile control information for causing the controller device 113a to present a tactile stimulus. The tactile presentation control section 225 transmits a tactile control signal to the controller device 113a via the terminal apparatus 112.

The controller device 113a, on the other hand, receives the tactile control information. Each tactile device of the controller device 113a presents a tactile stimulus on the basis of the tactile control information.

Thereafter, the process returns to step S51, and the processing in step S51 and subsequent steps is performed.

The controller device 113a thus appropriately presents a tactile stimulus to the user.

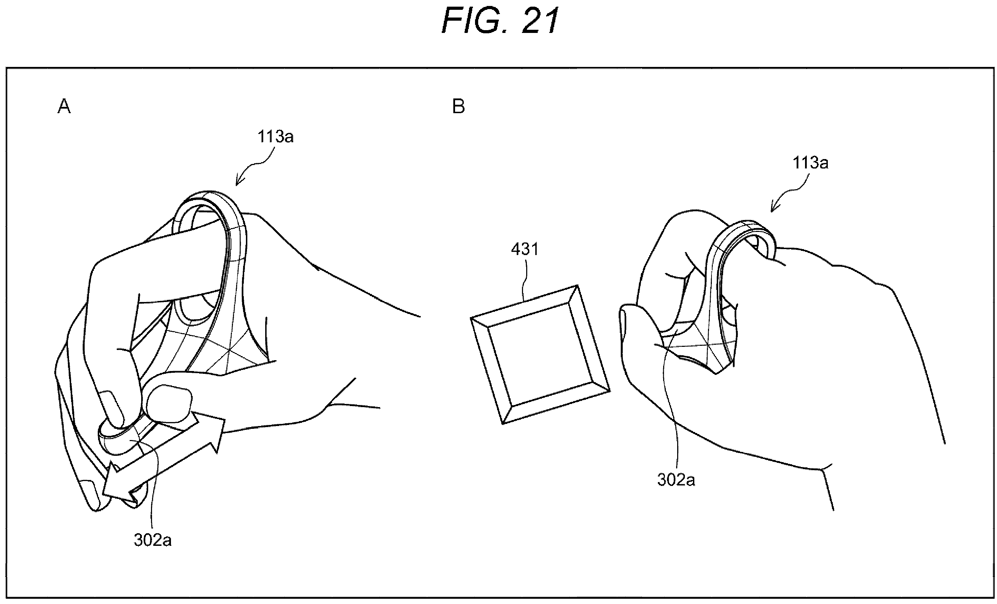

Here, examples of a method of presenting tactile feedback performed by the controller device 113a will be described with reference to Figs. 21 to 23.

For example, in a case where the operation member 332a (Fig. 9) near the tip of the operation portion 302a of the controller device 113a includes a touch pad and the fingertip of the index finger slides the operation member 332a in the front-rear direction as illustrated in A of Fig. 21, the tactile device 372a (Fig. 13) disposed near the operation member 332a presents a tactile stimulus to the fingertip of the index finger.

For example, as illustrated in B of Fig. 21, in a case where the user touches a button 431 in the XR space with the tip of the operation portion 302a of the controller device 113a, the tactile device 372a (Fig. 13) presents a tactile stimulus to the fingertip of the index finger.

For example, in a case where the hand holding the controller device 113a or the controller device 113a collides with a virtual object in the XR space, an impact due to the collision is expressed using each tactile device of the controller device 113a.

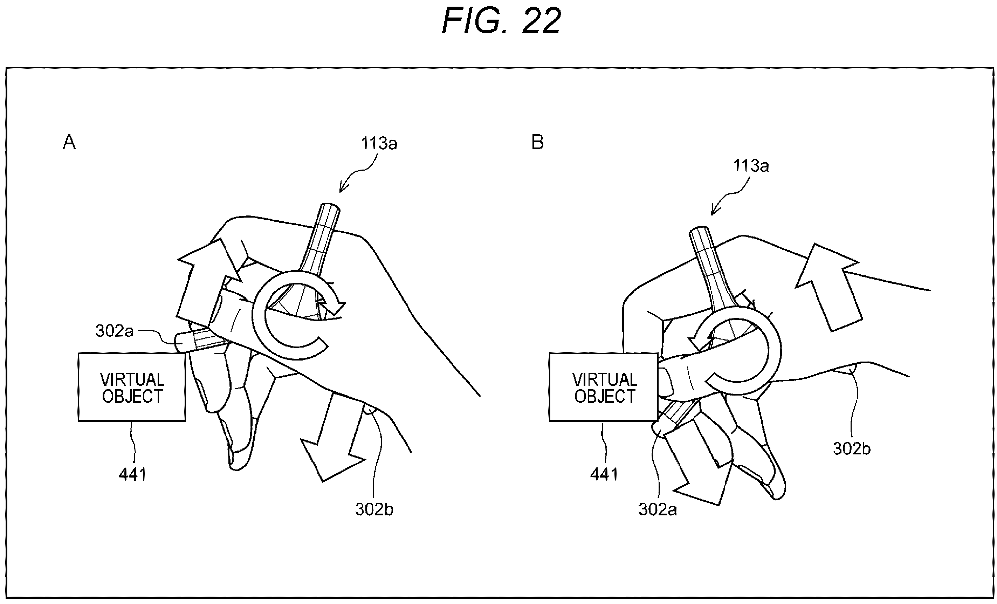

For example, A of Fig. 22 illustrates an example of a case where the tip of the operation portion 302a of the controller device 113a collides with a virtual object 441 in the XR space from above. In this case, for example, the tactile device 372a (Fig. 13) near the tip of the operation portion 302a presents upward vibration, and the tactile device 372b (Fig. 13) near the tip of the holding portion 302b presents downward vibration. As a result, it is possible to make the user feel upward rotational force (moment) with respect to the controller device 113a.

For example, B of Fig. 22 illustrates an example of a case where the tip of the operation portion 302a of the controller device 113a collides with the virtual object 441 in the XR space from below. In this case, for example, the tactile device 372a (Fig. 13) near the tip of the operation portion 302a presents downward vibration, and the tactile device 372b (Fig. 13) near the tip of the holding portion 302b presents upward vibration. As a result, it is possible to make the user feel downward rotational force (moment) with respect to the controller device 113a.

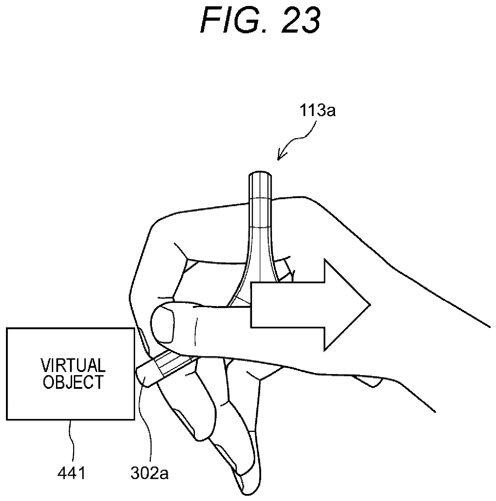

For example, Fig. 23 illustrates an example of a case where the tip of the operation portion 302a of the controller device 113a collides with the virtual object 441 in the XR space from the front. In this case, for example, the entirety of the controller device 113a is vibrated by vibrating the tactile device 371 (Fig. 13) near the center of the controller device 113a. As a result, the user can feel reaction force from the virtual object 441 to the controller device 113a.

The operability of the controller device 113a can thus be improved. As a result, operability with respect to the XR space improves.

### <Method for Specifying Virtual Object>

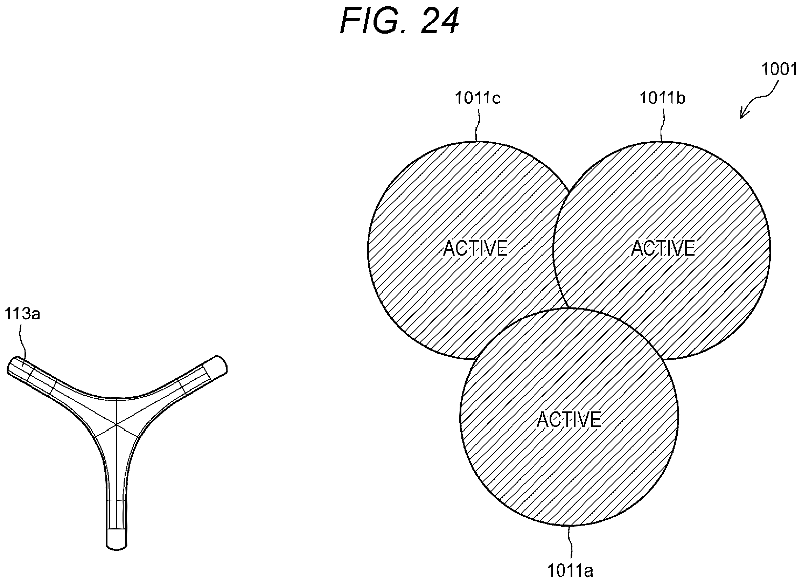

Next, an example of a method for specifying a desired virtual object in an XR space using the controller device 113a as a pointing device will be described with reference to Figs. 24 to 33.

For example, in a case where a large number of virtual objects are assembled together in an XR space, it is sometimes difficult to specify a desired virtual object from among the virtual objects. For example, it is sometimes difficult to specify a desired component from an aggregate (hereinafter referred to as an assembly) of assembled components that are a plurality of virtual objects.

In response to this, an example of a method for specifying a component to be activated from among virtual components constituting a virtual assembly will be described hereinafter.

Here, indicating a component means, for example, simply indicating a component using the controller device 113a. Specifying a component means, for example, defining (selecting) a component as a target (for example, an operation target, an attention target, or the like). For example, a component is specified by performing a predetermined operation in a state where the component is indicated using the controller device 113a. Activating a component means, for example, making a component an operation target.

In order to simplify description, an example in which a desired component is specified and activated from among an assembly 1001 including three virtual components 1011a to 1011c will be described hereinafter as illustrated in Fig. 24.

Note that, for example, it is assumed that the entire assembly 1001 (all components 1011) is activated when an HMD app is activated.

The components 1011a to 1011c will be simply referred to as components 1011 in a case where it is not necessary to distinguish each of the components 1011a to 1011c.

### <First Embodiment of Process for Controlling Activation>

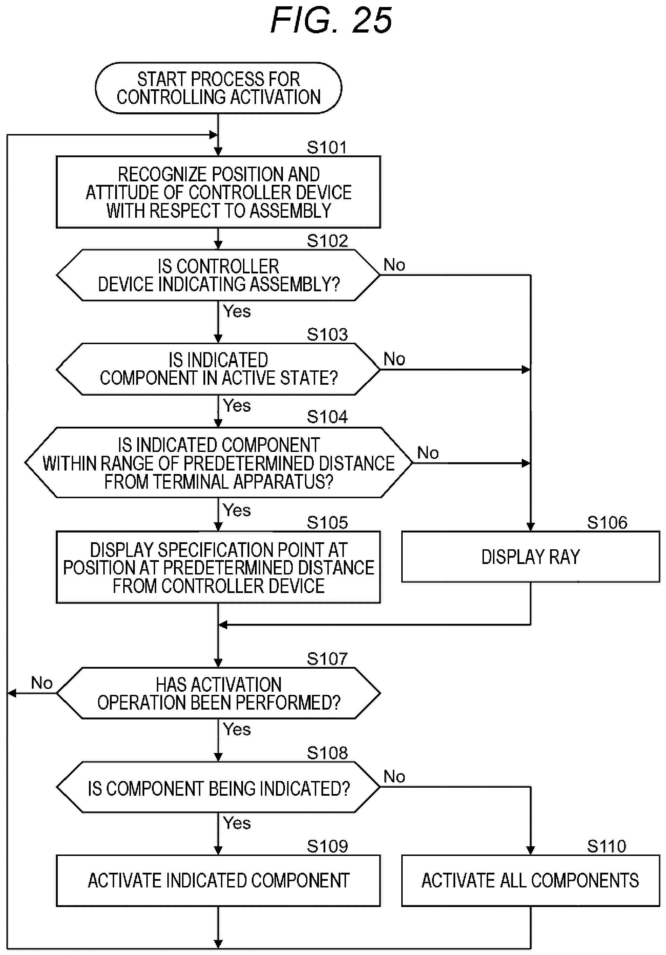

Here, a first embodiment of a process for controlling activation performed by the XR system 101 will be described with reference to a flowchart of Fig. 25.

In step S101, the information processing apparatus 111 recognizes a position and an attitude of the controller device 113a with respect to the assembly 1001.

For example, the sensing unit 252 of the terminal apparatus 112 senses the state of the terminal apparatus 112 and the state of the surroundings of the terminal apparatus 112, and supplies sensing data indicating a result of the sensing to the control unit 253. The control unit 253 transmits the sensing data to the information processing apparatus 111.

The control unit 202 of the information processing apparatus 111, on the other hand, receives the sensing data. The recognition section 221 of the control unit 202 recognizes the position and attitude of the controller device 113a with respect to the terminal apparatus 112 on the basis of the sensing data. The recognition section 221 recognizes the position and attitude of the controller device 113a with respect to the assembly 1001 in the XR space displayed by the terminal apparatus 112 on the basis of the position and attitude of the controller device 113a with respect to the terminal apparatus 112.

In step S102, the recognition section 221 determines, on the basis of a result of the processing in step S101, whether or not the controller device 113a is indicating the assembly 1001.

For example, in a case where the controller device 113a is held forward, a direction in which the tip of the operation portion 302a faces is an indication direction of the controller device 113a. For example, in a case where the controller device 113a is held backward, a direction in which the tip of the holding portion 302b faces is the indication direction of the controller device 113a.

In a case where the assembly 1001 exists in the indication direction of the controller device 113a, that is, in a case where the indication direction of the controller device 113a intersects with the assembly 1001 in the XR space, the recognition section 221 determines that the controller device 113a is indicating the assembly 1001, and the process proceeds to step S103.

Note that the tip of the operation portion 302a in a case where the controller device 113a is held forward and the tip of the holding portion 302b in a case where the controller device 113a is held backward will be referred to as a tip of the controller device 113a hereinafter.

In step S103, the recognition section 221 determines whether or not the indicated component is in an active state. Specifically, if a component 1011 of the assembly 1001 existing in the indication direction of the controller device 113a is in the active state, the recognition section 221 determines that the indicated component is in the active state, and the process proceeds to step S104.

In step S104, the recognition section 221 determines whether or not the indicated component 1011 is within a range of a predetermined distance from the terminal apparatus 112. For example, the recognition section 221 recognizes a distance to the indicated component 1011 with respect to the terminal apparatus 112 on the basis of the sensing data received in the processing in step S101 and information regarding the XR space supplied from the space control section 223. If the recognized distance is smaller than or equal to a predetermined threshold (hereinafter referred to as a distance threshold), the recognition section 221 determines that the indicated component 1011 is within the range of the predetermined distance from the terminal apparatus 112, and the process proceeds to step S105.

For example, the distance threshold is set to a range (for example, about 50 cm) in which the user can reach the indicated component 1011.

In step S105, the XR system 101 displays a specification point at a position at a predetermined distance from the controller device 113a. Specifically, the space control section 223 of the information processing apparatus 111 controls the display unit 254 of the terminal apparatus 112 in such a way as to display the specification point, which is a virtual bright spot, in the XR space at a position at the predetermined distance from the tip of the controller device 113a in the indication direction of the controller device 113a. That is, the controller device 113a virtually outputs the specification point.

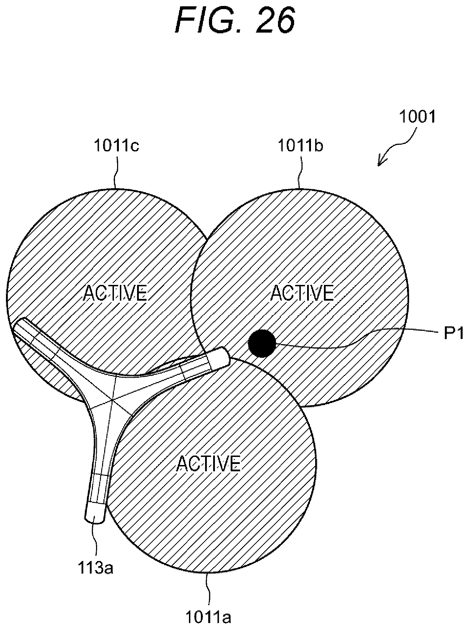

For example, as illustrated in Fig. 26, a specification point P1 is displayed at a position away from the tip of the controller device 113a by the predetermined distance.

As a result, the method of indicating the position in the XR space by the controller device 113a (Hereinafter, referred to as a pointing method.) is set to the designated point mode.

Thereafter, the process proceeds to Step S107.

If the recognized distance exceeds the distance threshold in step S104, on the other hand, the recognition section 221 determines that the indicated component 1011 is out of the range of the predetermined distance from the terminal apparatus 112, and the process proceeds to step S106.

In addition, if it is determined in step S103 that the indicated component 1011 is in an inactive state, the process proceeds to step S106.

Moreover, if the assembly 1001 does not exist in the indication direction of the controller device 113a in step S102, the recognition section 221 determines that the controller device 113a is not indicating the assembly 1001, and the process proceeds to step S106.

In step S106, the XR system 101 displays a ray. Specifically, the space control section 223 of the information processing apparatus 111 controls the display unit 254 of the terminal apparatus 112 in such a way as to display a ray, which is a virtual light beam extending from the tip of the controller device 113a in the indication direction of the controller device 113a, in the XR space. That is, a ray is virtually output from the tip of the controller device 113a.

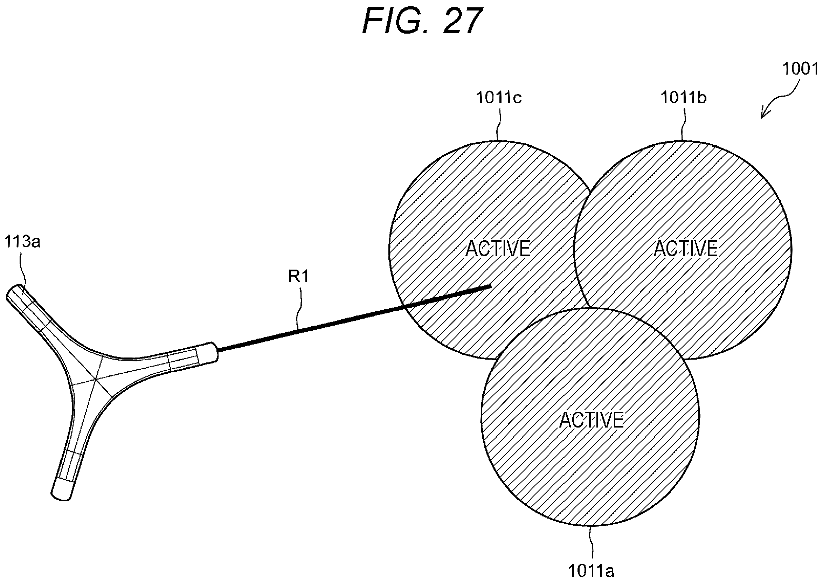

For example, as illustrated in Fig. 27, a ray R1 extending from the tip of the controller device 113a in the indication direction of the controller device 113a is displayed.

As a result, a pointing method of the controller device 113a is set to a ray mode.

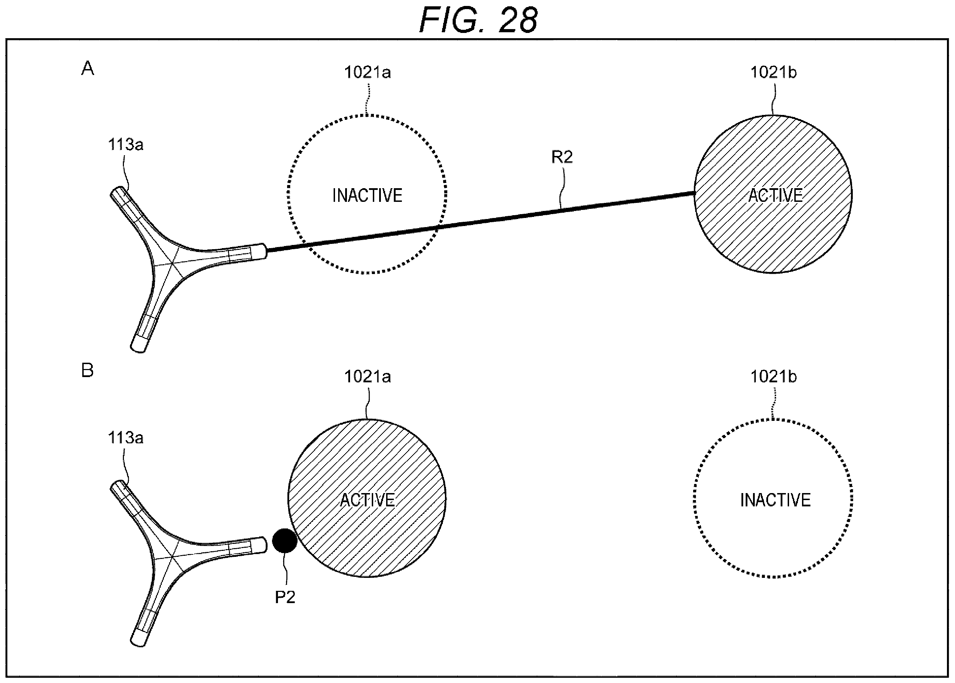

Note that, for example, as illustrated in Fig. 28, in a case where a component 1021a and a component 1021b are displayed in an overlapping manner in the indication direction of the controller device 113a, the pointing method is controlled (selected) on the basis of a distance between the terminal apparatus 112 and a component in the active state.

For example, in the case of A of Fig. 28, the component 1021a is in the inactive state, and the component 1021b is in the active state. In this case, therefore, the pointing method is selected on the basis of a distance between the terminal apparatus 112 and the component 1021b. For example, in a case where the distance between the terminal apparatus 112 and the component 1021b exceeds the distance threshold, the pointing method is set to the ray mode, and the controller device 113a virtually outputs a ray R2.

For example, in the case of B of Fig. 28, the component 1021a is in the active state, and the component 1021b is in the inactive state. In this case, therefore, the pointing method is selected on the basis of a distance between the terminal apparatus 112 and the component 1021a. For example, in a case where the distance between the terminal apparatus 112 and the component 1021a is smaller than or equal to the distance threshold, the pointing method is set to a specification point mode, and the controller device 113a virtually outputs a specification point P2.

Note that, as illustrated in the drawing, the specification point P2 is not necessarily displayed on the component 1021a.

Thereafter, the process proceeds to Step S107.

In step S107, the XR system 101 determines whether or not an activation operation has been performed.

For example, in a case where the user is to activate a desired component 1011, the user performs a predetermined activation operation on the controller device 113a in a state where the desired component 1011 is indicated by a ray or a specification point as illustrated in Fig. 26 or 27.

For example, in a case where the controller device 113a is held forward, a double click on the operation member 332a is the activation operation, and in a case where the controller device 113a is held backward, a double click on the operation member 332b is the activation operation.

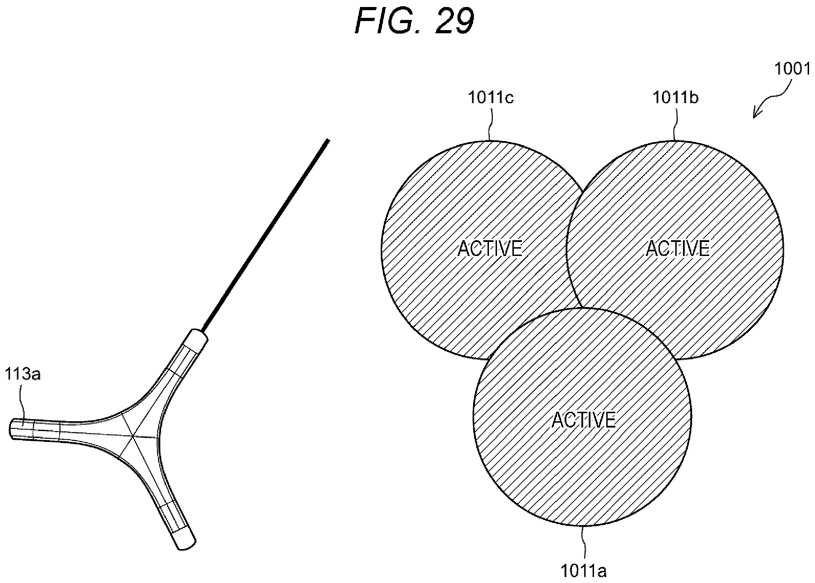

Furthermore, for example, in a case where the user is to activate all the components 1011, the user performs an activation operation on the controller device 113a in a state where the assembly 1001 is not indicated using the controller device 113, that is, in a state where no component 1011 is indicated by the controller device 113, as illustrated in Fig. 29.

In a case where the activation operation is performed, the controller device 113a transmits a controller signal including an operation input signal indicating the activation operation to the information processing apparatus 111 via the terminal apparatus 112.

The control unit 202 of the information processing apparatus 111, on the other hand, receives the controller signal via the communication unit 205.

If a controller signal including an operation input signal indicating the activation operation has not been received, on the other hand, the recognition section 221 of the information processing apparatus 111 determines that the activation operation has not been performed, and the process returns to step S101.

Thereafter, the processing in steps S101 to S107 is repeatedly performed until it is determined in step S107 that the activation operation has been performed.

If the recognition section 221 of the information processing apparatus 111 receives a controller signal including an operation input signal indicating the activation operation from the controller device 113a via the terminal apparatus 112 in step S107, on the other hand, it is determined that the activation operation has been performed, and the process proceeds to step S108.

In step S108, the recognition section 221 determines whether or not the component 1011 is being indicated. If it is determined that any component 1011 is being indicated using a specification point or a ray, the process proceeds to step S109.

In step S109, the XR system 101 activates the indicated component 1011.

Specifically, the recognition section 221 of the information processing apparatus 111 recognizes that the currently indicated component 1011 has been specified as an activation target.

The space control section 223 of the information processing apparatus 111 activates the component 1011 recognized as having been specified by the recognition section 221 and deactivates other components 1011. For example, the space control section 223 controls the display unit 254 of the terminal apparatus 112 to set the activated component 1011 and the deactivated components 1011 to different display modes so that the activated component 1011 stands out.

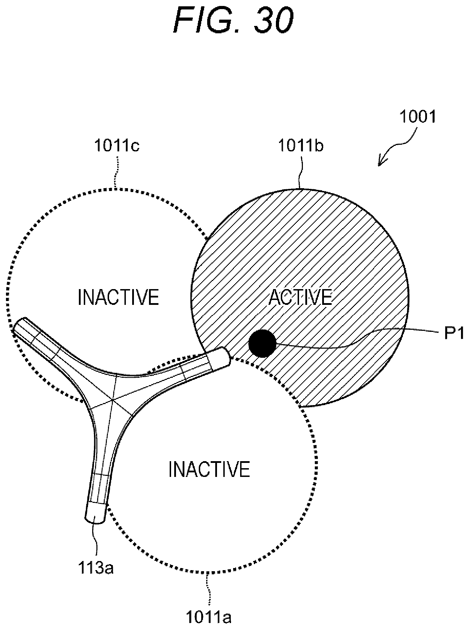

Fig. 30 illustrates a display example in a case where a component 1011b has been activated and components 1011a and 1011c have been deactivated. For example, a display mode of at least one of the component 1011a or the components 1011a and 1011c changes such that the activated component 1011b stands out and the deactivated components 1011a and 1011c become inconspicuous. Specifically, for example, the activated component 1011a continues to be displayed in the same manner while the deactivated components 1011a and 1011c become translucent.

Furthermore, for example, the space control section 223 sets the activated component 1011 as an operation target and enables an operation on the activated component 1011. For example, in a case where the recognition section 221 recognizes an operation on the activated component 1011, the space control section 223 performs control in such a way as to perform corresponding processing.

The space control section 223, on the other hand, sets the deactivated components 1011 as non-operation targets and disables an operation on the deactivated components 1011. For example, in a case where the recognition section 221 recognizes an operation on one of the deactivated components 1011, the space control section 223 performs control in such a way as not to perform corresponding processing.

Thereafter, the process returns to step S101, and the processing in step S101 and subsequent steps is performed.

If it is determined in step S108 that any component 1011 is not being indicated using a specification point or a ray, on the other hand, the process proceeds to step S110.

In step S110, the XR system 101 activates all the components 1011.

Specifically, the recognition section 221 of the information processing apparatus 111 recognizes that activation states of the components 1011 have been reset and all the components 1011 have been specified as targets to be activated.

The space control section 223 of the information processing apparatus 111 activates all the components 1011, and controls the display unit 254 of the terminal apparatus 112 in such a way as to display all the components 1011 in a display mode indicating activation. The space control section 223 sets all the components 1011 as operation targets and enables an operation on all the components 1011.

Thereafter, the process returns to step S101, and the processing in step S101 and subsequent steps is performed.

Operability of an operation related to indicating of a position in an XR space thus improves.

For example, in a three-dimensional model in which a large number of components are mixed, such as an assembly file, a desired component can be easily indicated and activated.

Furthermore, since long-distance pointing by a ray and short-distance pointing by a specification point are automatically and immediately switched, it is possible to perform accurate pointing at a short distance while enabling long-distance pointing.

For example, the user can indicate a desired component 1011 using a ray from a location remote from the assembly 1001, and indicate a desired component 1011 using a specification point at a location near the assembly 1001. Since the pointing method is automatically switched in accordance with a distance to a component 1011, the user can easily indicate and activate a desired component 1011.

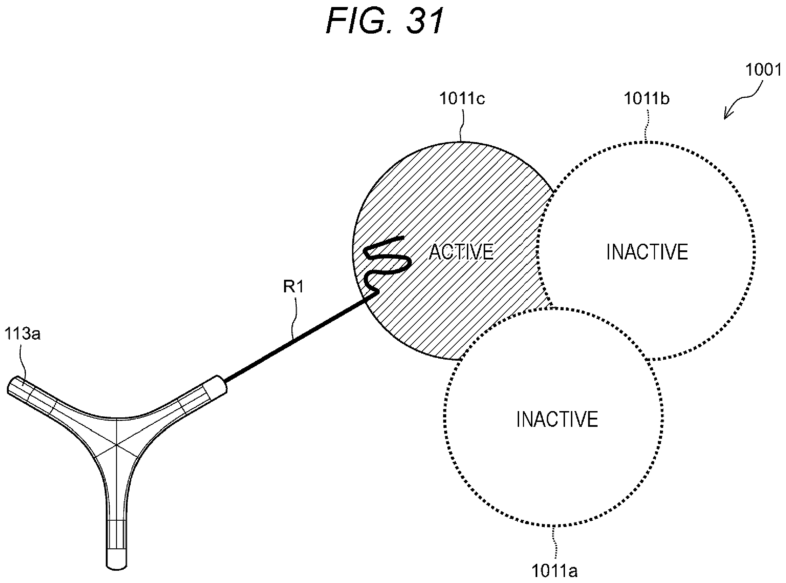

Note that, for example, in a case where the recognition section 221 of the information processing apparatus 111 recognizes a predetermined gesture using the controller device 113a instead of an activation operation, the space control section 223 may activate an indicated component 1011. For example, as illustrated in Fig. 31, in a case where a position indicated using a ray

(or a specification point) is laterally swung on a component 1011 a predetermined number of times or more (for example, twice or more) with an amplitude of a predetermined length or less (for example, 1 cm or less) within a predetermined time (for example, within 1 second), the component 1011 may be activated.

This saves time and effort for performing an activation operation on the controller device 113a.

### <Second Embodiment of Process for Controlling Activation>

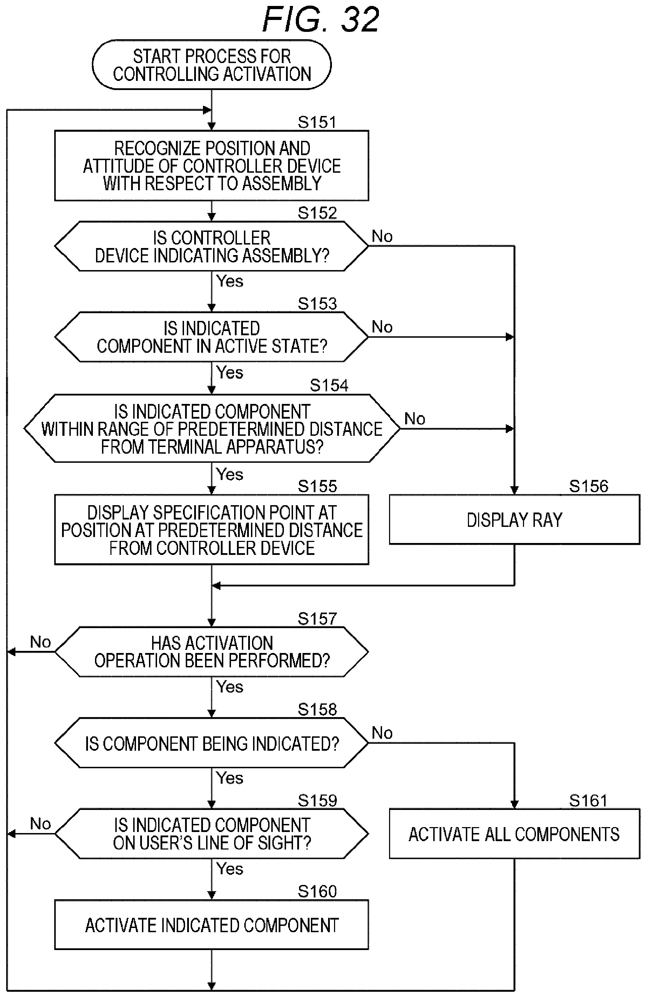

Next, a second embodiment of the process for controlling activation performed by the XR system 101 will be described with reference to a flowchart of Fig. 32.

In the second embodiment, activation of the components 1011 is controlled further on the basis of the line-of-sight direction of the user.

In steps S151 to S158, processing similar to that in steps S101 to S108 in Fig. 25 is performed.

If it is determined in step S158 that a component is being indicated, the process proceeds to step S159.

In step S159, the recognition section 221 of the information processing apparatus 111 determines whether or not the indicated component 1011 is on the user's line of sight. Specifically, the recognition section 221 estimates the line-of-sight direction of the user on the basis of the sensing data received in the processing in step S151. If the recognition section 221 determines that the indicated component 1011 is on the user's line of sight on the basis of a result of the estimation of the line-of-sight direction of the user, the process proceeds to step S160.

In step S160, the indicated component 1011 is activated as in the processing in step S109 in Fig. 25.

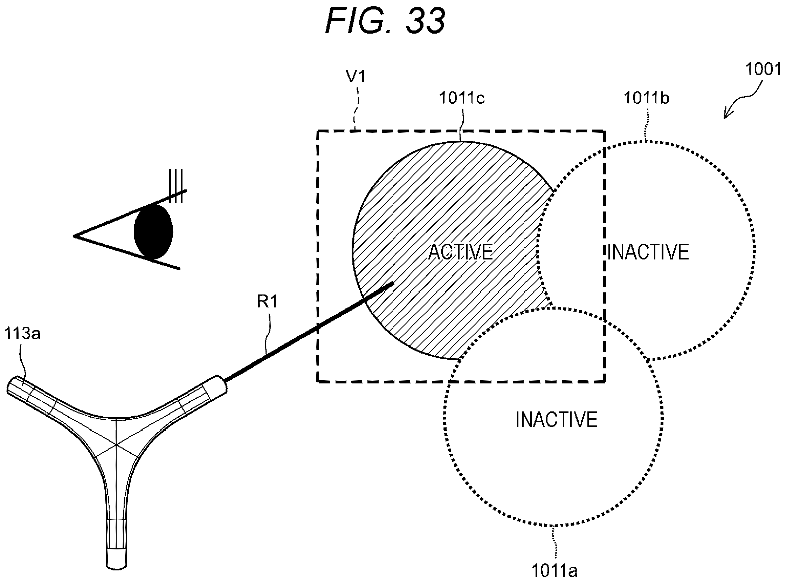

For example, a range V1 in Fig. 33 indicates an estimated range of the user's line of sight. Since the indicated component 1011c exists within the range V1, the component 1011c is then activated.

Thereafter, the process returns to step S151, and the processing in step S151 and subsequent steps is performed.

If it is determined in step S159 that the indicated component 1011 is not on the user's line of sight, on the other hand, the process returns to step S151, and the processing in step S151 and subsequent steps is performed. That is, in this case, the indicated component 1011 is not activated.

If it is determined in step S158 that no component 1011 is being indicated, on the other hand, the process proceeds to step S161.

In step S161, all the components 1011 are activated as in the processing in step S110 in Fig. 25.

Thereafter, the process returns to step S151, and the processing in step S151 and subsequent steps is performed.

It is thus possible to prevent an unintended component 1011 from being specified and activated outside the user's line of sight.

### <<2. Modifications>>

Modifications of the above embodiment of the present technology will be described hereinafter.

### <Modifications Relating to Controller Device 113a>

Although an example in which the controller device 113a can be held forward or backward has been described in the above description, the controller device 113a may be held, for example, only forward, instead.

In this case, the operation portion 302a and the holding portion 302b do not necessarily have symmetrical shapes about the ring portion 301, and for example, the operation portion 302a and the holding portion 302b may have different shapes. Furthermore, the operation member 332b and the operation member 333b of the holding portion 302b may be removed.

For example, a material other than a resin, such as metal, may be used for the controller device 113a.

### <Modifications Relating to Sharing of Processing>

For example, a part of the processing by the information processing apparatus 111 may be performed by the terminal apparatus 112.

For example, the terminal apparatus 112 may perform all or part of the processing by the information processing unit 211 of the information processing apparatus 111. For example, the terminal apparatus 112 may independently present an XR space without being controlled by the information processing apparatus 111. For example, the information processing apparatus 111 and the terminal apparatus 112 may independently share and perform processing such as construction of an XR space.

### <Modifications Relating to Method for Indicating and Specifying Position in XR Space>

Although an example in which a component to be activated is specified has been described in the above description, the present technology can be applied to a case where a virtual object is specified in an XR space regardless of a purpose of the specification.

The present technology can also be applied to, for example, a case where a position in an XR space is indicated or specified using an input device other than the controller device 113a.

The specification point need not necessarily be a virtual bright spot, and may be, for example, a virtual point that does not emit light, instead.

The ray need not necessarily be a virtual light beam (line of light), and may be a virtual line that does not emit light, instead.

For example, a display mode of a virtual object indicated or specified in an XR space may be different from a display mode of other virtual objects regardless of the activation.

### <Modifications Relating to Switching Condition of Pointing Method>

For example, the user may set the distance threshold, which is a switching condition of the pointing method.

According to the invention, the space control section 223 of the information processing apparatus 111 adjusts the distance threshold on the basis of the state of the surroundings of the terminal apparatus 112 (user) recognized by the recognition section 221. For example, the space control section 223 may adjust the distance threshold on the basis of a space in which the user is located.

Specifically, for example, in a case where the user is in a wide space, like a warehouse, where the user can walk around, the space control section 223 may increase the distance threshold. For example, since the user can move and indicate a virtual object in a wide space, it is considered that convenience of the user is improved by widening a range in which a virtual object can be indicated using a specification point.

As a distance to a component used for a determination of switching of the pointing method, for example, a distance based on the controller device 113a may be used.

As the distance used for the determination of the switching of the pointing method, for example, a distance other than a distance to an activated component may be used. For example, a distance to the closest virtual object may be used.

### <Modifications Relating to Gesture for Activation>

For example, as described above with reference to Fig. 31, in a case where a gesture is used to activate a component 1011, the learning section 226 of the information processing apparatus 111 may adjust a determination criterion of a gesture for the activation on the basis of the user's operation history.

For example, as described above, in a case where a component 1011 is activated when the user laterally swings an indicated position on the component 1011 twice or more with an amplitude of 1 cm or less within 1 second and the user tends to laterally swing an indicated position indicated on a component 1011 for 1.1 seconds on average, the learning section 226 may change the determination condition of the gesture for the activation to within 1.2 seconds.

Furthermore, in a case where a similar gesture is performed in a state where any component 1011 is not indicated, all the components may be activated.

Furthermore, for example, in a case where the recognition section 221 of the information processing apparatus 111 recognizes a predetermined gesture of the user unrelated to the controller device 113a, the space control section 223 may activate an indicated component 1011.

### <Other Modifications>

For example, the controller device 113a can be used for operation of not only an XR space but also a two-dimensional space and a three-dimensional space in a game or the like.

### <<3. Others>>

### <Configuration Example of Computer>

The above-described series of processing can be executed by hardware and can also be executed by software. In a case where the series of processing is executed by software, a program constituting the software is installed in a computer. Here, examples of the computer include a computer incorporated in dedicated hardware, and for example, a general-purpose personal computer that can execute various functions by installing various programs.

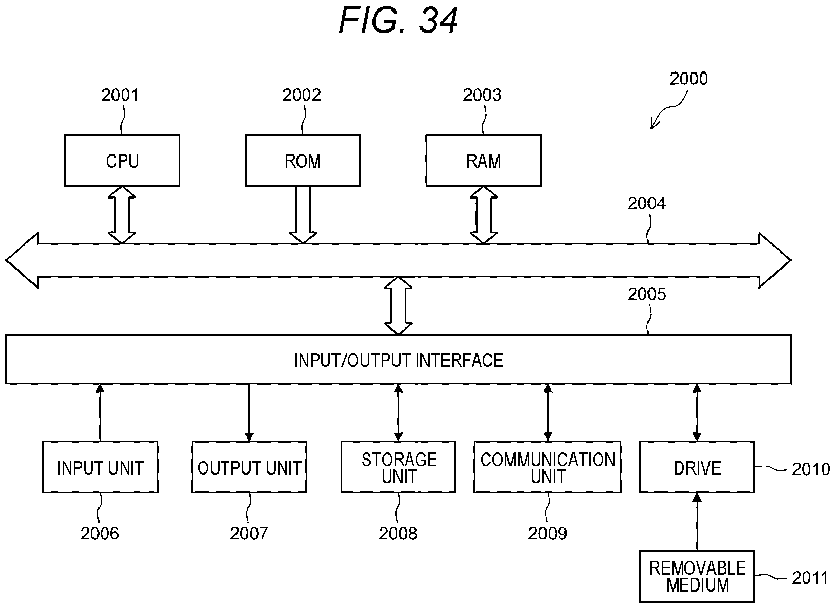

Fig. 34 is a block diagram illustrating a configuration example of hardware of a computer that executes the series of processes described above in accordance with a program.

In a computer 2000, a central processing unit (CPU) 2001, a read only memory (ROM) 2002, and a random access memory (RAM) 2003 are mutually connected by a bus 2004.

An input/output interface 2005 is further connected to the bus 2004. An input unit 2006, an output unit 2007, a storage unit 2008, a communication unit 2009, and a drive 2010 are connected to the input/output interface 2005.

The input unit 2006 includes an input switch, a button, a microphone, an image sensor, and the like. The output unit 2007 includes a display, a speaker, and the like. The storage unit 2008 includes a hard disk, a nonvolatile memory, and the like. The communication unit 2009 includes a network interface and the like. The drive 2010 drives a removable medium 2011 such as a magnetic disk, an optical disk, a magneto-optical disk, or a semiconductor memory.

In the computer 2000 configured as described above, the series of processing described above is performed, for example, by the CPU 2001 loading a program stored in the storage unit 2008 into the RAM 2003 via the input/output interface 2005 and the bus 2004, and executing the program.

The program executed by the computer 2000 (the CPU 2001) can be provided by being recorded on, for example, the removable medium 2011 as a package medium or the like. Furthermore, the program can be provided via a wired or wireless transmission medium such as a local area network, the Internet, or digital satellite broadcasting.

In the computer 2000, the program can be installed in the storage unit 2008 via the input/output interface 2005 by mounting the removable medium 2011 on the drive 2010. Furthermore, the program can be received by the communication unit 2009 via a wired or wireless transmission medium, and be installed into the storage unit 2008. In addition, the program can be installed beforehand into the ROM 2002 or the storage unit 2008.

Note that the program executed by the computer may be a program in which processing is performed in time series in the order described in the present specification or may be a program in which processing is performed in parallel or at necessary timing such as when a call is made.

Further, in the present description, a system is intended to mean assembly of a plurality of components (devices, modules (parts), and the like), and it does not matter whether or not all the components are in the same housing. Therefore, a plurality of devices housed in separate housings and connected to each other via a network and one device in which a plurality of modules is housed in one housing are both systems.

Further, embodiments of the present technology are not limited to the embodiment described above, and various modifications can be made without departing from the scope of the present technology.

For example, the present technology may be embodied in cloud computing in which a function is shared and executed by a plurality of devices via a network.

Further, each step described in the flowchart described above can be performed by one device or can be shared and performed by a plurality of devices.

Moreover, in a case where a plurality of pieces of processing is included in one step, the plurality of pieces of processing included in the one step can be executed by one device or executed by a plurality of devices in a shared manner.

Note that the effects described in the present specification are merely examples and are not limited, and other effects may also be produced.

### REFERENCE SIGNS LIST

- 101: XR system
- 111: Information processing apparatus
- 112: Terminal apparatus
- 113, 113a, 113b: Controller device
- 202: Control unit
- 203: Display unit
- 211: Information processing unit
- 221: Recognition section
- 222: Operation control section
- 223: Space control section
- 224: Audio control section
- 225: Tactile presentation control section
- 226: Learning section
- 252: Sensing unit
- 253: Control unit
- 254: Display unit
- 255: Audio output unit
- 301: Ring portion
- 301A: Hole
- 302a: Operation portion
- 302b: Holding portion
- 312a, 312b: Upper surface
- 313: Bottom surface
- 331 to 334: Operation member
- 351: Markers
- 371 to 372b: Tactile device
- 401: Camera

## Claims

1. An information processing apparatus (111) comprising:
a recognition unit (221) that recognizes a distance to a virtual object in a Cross Reality (XR) space; and
a space control section (223) that controls a method for indicating a position in the XR space using an input device on a basis of the distance to the virtual object; wherein
in a case where the distance to the virtual object is smaller than or equal to a predetermined threshold, the space control section indicates a position in the XR space using a point virtually output from the input device, and in a case where the distance to the virtual object exceeds the threshold, the space control section indicates a position in the XR space using a line virtually output from the input device; and
**characterised in that:**
the recognition unit recognizes a state of surroundings of a user, and
the space control section adjusts the threshold on a basis of the state of the surroundings of the user.

2. The information processing apparatus according to claim 1, wherein
in a case where a predetermined operation or gesture is performed in a state where the virtual object is indicated using the point or the line, the recognition unit recognizes that the virtual object has been specified.

3. The information processing apparatus according to claim 2, wherein
the space control section controls display of the XR space such that the specified virtual object and another virtual object are displayed in different display modes.

4. The information processing apparatus according to claim 2, wherein
the space control section activates the specified virtual object and deactivates another virtual object.

5. The information processing apparatus according to claim 4, wherein
the space control section controls the method for indicating a position in the XR space using the input device on a basis of a distance to the activated virtual object.

6. The information processing apparatus according to claim 2, wherein
the recognition unit estimates a line-of-sight direction of a user, and recognizes that the virtual object has been specified in a case where the operation or the gesture is performed in a state where the virtual object is indicated using the point or the line within an estimated range of the user's line-of-sight.

7. The information processing apparatus according to claim 2, further comprising:
a learning unit that adjusts a determination criterion of the gesture on a basis of the user's operation history.

8. The information processing apparatus according to claim 1, wherein
the recognition unit recognizes that all the virtual objects have been specified in a case where a predetermined operation or gesture is performed in a state where any of the virtual objects is not indicated using the point or the line.

9. The information processing apparatus according to claim 8, wherein
the space control section activates all the specified virtual objects.

10. The information processing apparatus according to claim 1, wherein
the input device includes:
a ring portion into which a finger is inserted;
an operation portion operable by a finger inserted into the ring portion in a first direction; and
a holding portion held in a palm in a case where the operation portion is operated by the finger, and
the point or the line is virtually output in a direction indicated by a tip of the operation portion.

11. The information processing apparatus according to claim 1, wherein
the space control section controls the method for indicating a position in the XR space using the input device on a basis of a distance between a terminal apparatus that is worn by a user and that displays the XR space and the virtual object.

12. An information processing method performed by an information processing apparatus, the information processing method comprising:
recognizing a distance to a virtual object in an XR space; and
controlling a method for indicating a position in the XR space using an input device on a basis of the distance to the virtual object; wherein
in a case where the distance to the virtual object is smaller than or equal to a predetermined threshold, the method comprises indicating a position in the XR space using a point virtually output from the input device, and in a case where the distance to the virtual object exceeds the threshold, the method comprises indicating a position in the XR space using a line virtually output from the input device; and
**characterised in that** the method further comprises:
recognizing a state of surroundings of a user, and
adjusting the threshold on a basis of the state of the surroundings of the user.

## Patentansprüche

1. Informationsverarbeitungseinrichtung (111), umfassend:
eine Erkennungseinheit (221), die einen Abstand zu einem virtuellen Objekt in einem Cross-Reality-Raum (XR-Raum) erkennt; und
einen Raumsteuerabschnitt (223), der ein Verfahren zum Angeben einer Position in dem XR-Raum unter Verwendung einer Eingabevorrichtung auf Basis des Abstands zu dem virtuellen Objekt steuert; wobei
in einem Fall, in dem der Abstand zu dem virtuellen Objekt kleiner als oder gleich einem vorbestimmten Schwellenwert ist, der Raumsteuerabschnitt eine Position in dem XR-Raum unter Verwendung eines Punkts angibt, der von der Eingabevorrichtung virtuell ausgegeben wird, und in einem Fall, in dem der Abstand zu dem virtuellen Objekt den Schwellenwert überschreitet, der Raumsteuerabschnitt eine Position in dem XR-Raum unter Verwendung einer Linie angibt, die von der Eingabevorrichtung virtuell ausgegeben wird; und
**dadurch gekennzeichnet, dass**:
die Erkennungseinheit einen Umgebungszustand eines Benutzers erkennt, und
der Raumsteuerabschnitt den Schwellenwert auf Basis des Zustands der Umgebung des Benutzers angibt.

2. Informationsverarbeitungseinrichtung nach Anspruch 1, wobei
in einem Fall, in dem eine vorbestimmte Bedienung oder eine Geste in einem Zustand durchgeführt wird, in dem das virtuelle Objekt unter Verwendung des Punkts oder der Linie angegeben wird, die Erkennungseinheit erkennt, dass das virtuelle Objekt spezifiziert worden ist.

3. Informationsverarbeitungseinrichtung nach Anspruch 2, wobei
der Raumsteuerabschnitt die Anzeige des XR-Raums derart steuert, dass das spezifizierte virtuelle Objekt und ein weiteres virtuelles Objekt in unterschiedlichen Anzeigemodi angezeigt werden.

4. Informationsverarbeitungseinrichtung nach Anspruch 2, wobei
der Raumsteuerabschnitt das spezifizierte virtuelle Objekt aktiviert und ein anderes virtuelles Objekt deaktiviert.

5. Informationsverarbeitungseinrichtung nach Anspruch 4, wobei
der Raumsteuerabschnitt das Verfahren zum Angeben einer Position in dem XR-Raum unter Verwendung der Eingabevorrichtung auf Basis eines Abstands zu dem aktivierten virtuellen Objekt steuert.

6. Informationsverarbeitungseinrichtung nach Anspruch 2, wobei
die Erkennungseinheit eine Blickrichtung eines Benutzers schätzt und erkennt, dass das virtuelle Objekt in einem Fall spezifiziert worden ist, in dem die Bedienung oder die Geste in einem Zustand durchgeführt wird, in dem das virtuelle Objekt unter Verwendung des Punktes oder der Linie innerhalb eines geschätzten Bereichs der Blickrichtung des Benutzers angegeben wird.

7. Informationsverarbeitungseinrichtung nach Anspruch 2, ferner umfassend:
eine Lerneinheit, die ein Bestimmungskriterium der Geste auf Basis der Bedienungshistorie des Benutzers anpasst.

8. Informationsverarbeitungseinrichtung nach Anspruch 1, wobei
die Erkennungseinheit erkennt, dass alle virtuellen Objekte spezifiziert wurden, in einem Fall, in dem eine vorbestimmte Bedienung oder eine Geste in einem Zustand durchgeführt wird, in dem keines der virtuellen Objekte unter Verwendung des Punktes oder der Linie angegeben wird.

9. Informationsverarbeitungseinrichtung nach Anspruch 8, wobei
der Raumsteuerabschnitt alle spezifizierten virtuellen Objekte aktiviert.

10. Informationsverarbeitungseinrichtung nach Anspruch 1, wobei
die Eingabevorrichtung einschließt:
einen Ringabschnitt, in den ein Finger eingeführt wird;
einen Bedienungsabschnitt, der durch einen in einer ersten Richtung in den Ringabschnitt eingeführten Finger betätigbar ist; und
einen Halteabschnitt, der in einer Handfläche gehalten wird, in einem Fall, in dem der Bedienungsabschnitt durch den Finger betätigt wird, und
der Punkt oder die Linie in eine durch eine Spitze des Bedienungsabschnitts angegebene Richtung virtuell ausgegeben wird.

11. Informationsverarbeitungseinrichtung nach Anspruch 1, wobei
der Raumsteuerabschnitt das Verfahren zum Angeben einer Position in dem XR-Raum unter Verwendung der Eingabeeinrichtung steuert, die von einem Benutzer getragen wird und die den XR-Raum und das virtuelle Objekt anzeigt.

12. Informationsverarbeitungsverfahren, das durch eine Informationsverarbeitungseinrichtung durchgeführt wird, das Informationsverarbeitungsverfahren umfassend:
Erkennen eines Abstands zu einem virtuellen Objekt in einem XR-Raum; und
Steuern eines Verfahrens zum Angeben einer Position in dem XR-Raum unter Verwendung einer Eingabevorrichtung auf Basis des Abstands zu dem virtuellen Objekt; wobei
in einem Fall, in dem der Abstand zu dem virtuellen Objekt kleiner als oder gleich einem vorbestimmten Schwellenwert ist, das Verfahren das Angeben einer Position in dem XR-Raum unter Verwendung eines von der Eingabevorrichtung virtuell ausgegebenen Punktes umfasst, und in einem Fall, in dem der Abstand zu dem virtuellen Objekt den Schwellenwert überschreitet, das Verfahren das Angeben einer Position in dem XR-Raum unter Verwendung einer von der Eingabevorrichtung virtuell ausgegebenen Linie umfasst; und
**dadurch gekennzeichnet, dass** das Verfahren ferner umfasst:
Erkennen eines Umgebungszustands eines Benutzers, und
Anpassen des Schwellenwerts auf Basis des Zustands der Umgebung des Benutzers.

## Revendications

1. Appareil de traitement d'informations (111) comprenant :
une unité de reconnaissance (221) qui reconnaît une distance à un objet virtuel dans un espace de réalité croisée (XR) ; et
une section de commande d'espace (223) qui commande un procédé permettant d'indiquer une position dans l'espace XR à l'aide d'un dispositif d'entrée en fonction de la distance à l'objet virtuel ; dans lequel
dans un cas où la distance à l'objet virtuel est inférieure ou égale à un seuil prédéterminé, la section de commande d'espace indique une position dans l'espace XR à l'aide d'un point virtuellement délivré en sortie par le dispositif d'entrée, et dans un cas où la distance à l'objet virtuel dépasse le seuil, la section de commande d'espace indique une position dans l'espace XR à l'aide d'une ligne virtuellement délivrée en sortie par le dispositif d'entrée ; et
**caractérisé en ce que** :
l'unité de reconnaissance reconnaît un état de l'environnement d'un utilisateur, et
la section de commande de l'espace ajuste le seuil en fonction de l'état de l'environnement de l'utilisateur.

2. Appareil de traitement d'informations selon la revendication 1, dans lequel
dans un cas où une opération ou un geste prédéterminé est effectué dans un état où l'objet virtuel est indiqué à l'aide du point ou de la ligne, l'unité de reconnaissance reconnaît que l'objet virtuel a été spécifié.

3. Appareil de traitement d'informations selon la revendication 2, dans lequel
la section de commande d'espace commande l'affichage de l'espace XR de telle sorte que l'objet virtuel spécifié et un autre objet virtuel sont affichés dans des modes d'affichage différents.

4. Appareil de traitement d'informations selon la revendication 2, dans lequel
la section de commande d'espace active l'objet virtuel spécifié et désactive un autre objet virtuel.

5. Appareil de traitement d'informations selon la revendication 4, dans lequel
la section de commande d'espace commande le procédé permettant d'indiquer une position dans l'espace XR à l'aide du dispositif d'entrée en fonction d'une distance à l'objet virtuel activé.

6. Appareil de traitement d'informations selon la revendication 2, dans lequel
l'unité de reconnaissance estime une direction de ligne de vision d'un utilisateur et reconnaît que l'objet virtuel a été spécifié dans un cas où l'opération ou le geste est effectué dans un état où l'objet virtuel est indiqué à l'aide du point ou de la ligne dans une plage estimée de la ligne de vision de l'utilisateur.

7. Appareil de traitement d'informations selon la revendication 2, comprenant en outre :
une unité d'apprentissage qui ajuste un critère de détermination du geste en fonction de l'historique des opérations de l'utilisateur.

8. Appareil de traitement d'informations selon la revendication 1, dans lequel
l'unité de reconnaissance reconnaît que tous les objets virtuels ont été spécifiés dans un cas où une opération ou un geste prédéterminé est effectué dans un état où l'un quelconque des objets virtuels n'est pas indiqué à l'aide du point ou de la ligne.

9. Appareil de traitement d'informations selon la revendication 8, dans lequel
La section de commande d'espace active tous les objets virtuels spécifiés.

10. Appareil de traitement d'informations selon la revendication 1, dans lequel
le dispositif d'entrée comporte :
une partie anneau dans laquelle un doigt est inséré ;
une partie opération actionnable par un doigt inséré dans la partie anneau dans une première direction ; et
une partie maintien maintenue dans une paume dans un cas où la partie opération est actionnée par le doigt, et
le point ou la ligne est virtuellement délivré en sortie dans une direction indiquée par une pointe de la partie opération.

11. Appareil de traitement d'informations selon la revendication 1, dans lequel
la section de commande d'espace commande le procédé permettant d'indiquer une position dans l'espace XR à l'aide de l'appareil d'entrée qui est porté par un utilisateur et qui affiche l'espace XR et l'objet virtuel.

12. Procédé de traitement d'informations effectué par un appareil de traitement d'informations, le procédé de traitement d'informations comprenant :
la reconnaissance d'une distance à un objet virtuel dans un espace XR ; et
la commande d'un procédé permettant d'indiquer une position dans l'espace XR à l'aide d'un dispositif d'entrée en fonction de la distance à l'objet virtuel ; dans lequel
dans un cas où la distance à l'objet virtuel est inférieure ou égale à un seuil prédéterminé, le procédé comprend l'indication d'une position dans l'espace XR à l'aide d'un point virtuellement délivré en sortie par le dispositif d'entrée, et dans un cas où la distance à l'objet virtuel dépasse le seuil, le procédé comprend l'indication d'une position dans l'espace XR à l'aide d'une ligne virtuellement délivrée en sortie par le dispositif d'entrée ; et **caractérisé en ce que** le procédé comprend en outre :
la reconnaissance d'un état de l'environnement d'un utilisateur, et
l'ajustement du seuil en fonction de l'état de l'environnement de l'utilisateur.
